# FASCICULE DE BREVET EUROPEEN

(11) **EP 2 082 252 B1**
(45) Date de publication et mention de la délivrance du brevet: **19.05.2010**
(21) Numéro de dépôt: 07845450.1
(22) Date de dépôt: 09.11.2007
(51) Int. Cl.: G01S 5/02, G01S 5/14, G07C 9/00

(54) **SYSTÈME DE BADGES LUMINEUX DE PROTECTION, DE SÉCURITÉ ET DE SUIVI DES DÉPLACEMENTS**
SCHUTZ-, SICHERHEITS- UND VERLAGERUNGSVERFOLGUNGS-LEUCHT-PLAKETTENSYSTEM
PROTECTION, SECURITY AND DISPLACEMENT-TRACKING LUMINOUS BADGE SYSTEM

(30) Priorité: 09.11.2006 BE 200600538
(43) Date de publication de la demande: 29.07.2009
(73) Titulaire: Haumann, Philippe, 4577 Modave (BE)
(72) Inventeur: Haumann, Philippe, 4577 Modave (BE)
(74) Mandataire: Vandeberg, Marie-Paule L.G.
(86) Numéro de dépôt international: PCT/BE2007/000118
(87) Numéro de publication internationale: WO 2008/055323

(56) Documents cités:
- WO-A-03/075227
- WO-A-2004/100101
- GB-A- 2 383 215
- US-A1- 2002 164 994
- US-B1- 6 335 688

## Description

### Domaine de l'invention

L'invention se rapporte à des installations destinées à protéger, contrôler, sécuriser, surveiller les objets, biens, équipements, animaux ou personnes tant à l'intérieur qu'à l'extérieur ou, encore, à en suivre les déplacements.

### État de la technique

Il existe de nombreux systèmes relatifs à la surveillance, la protection, la sécurité ou la traçabilité des biens et des personnes. Citons, entre autres, les portiques, portes ou sas de contrôle de passage basés sur la lecture de badges magnétiques, de badges à puce électronique, de 'tags' RFID, de caractéristiques biométriques (empreinte d'un doigt, caractéristiques de l'iris, etc.) ou sur la détection d'étiquettes à boucles magnétiques. Dans un autre type de contrôle, citons également les détecteurs d'intrusion (à contacts, vibration, accélération, etc.), les détecteurs de mouvement, de présence ou d'absence (à infrarouge, à ultrasons, à ondes radars, etc.) et, enfin, les bracelets de contrôle des personnes surveillées.

Tous ces systèmes sont basés soit sur la détection d'une présence ou d'une absence d'êtres ou d'objets dans des espaces et/ou locaux déterminés, figés et limités, soit sur le contrôle en des points fixes (endroits de passage, entrées et sorties d'une enceinte, etc.). De plus, pour la plupart, ils nécessitent une gestion centralisée de la surveillance ou la sécurité sous la forme d'une centrale d'alarme ou d'une salle de contrôle de surveillance et/ou de sécurité.

Certes les applications basées sur l'utilisation du GPS ne sont pas limitées à des endroits fixes mais elles souffrent, par contre, d'une part, de recourir aux satellites, c'est-à-dire, à une infrastructure dont l'utilisateur n'est pas maître, d'autre part, de ne pas fonctionner à l'intérieur des bâtiments et, enfin, d'être grandes consommatrices d'énergie et donc une difficulté de leur miniaturisation suite à la capacité nécessaire de la source d'énergie qui les alimente.

Bien entendu, des inventions consacrées à la localisation ou à la sécurité évitent l'utilisation d'une infrastructure externe. Ainsi, le brevet US2006/0013070 présente une installation perfectionnée basée sur une infrastructure propriétaire qui utilise des ondes ultrasonores et radio. Cependant, malgré ses performances, cette invention est lourde à mettre en oeuvre et souffre d'un manque de fonctionnalités au niveau du dispositif mobile dont sont pourvus les objets ou les personnes. De plus, les éléments dont elle est constituée n'ont pas la polyvalence dont bénéficient ceux de l'invention décrite, ci-après, dans le présent document.

Le brevet US 2002/0164994 divulgue un système pour la configuration dynamique des fonctions d'un transpondeur pour la surveillance des objets ou personnes.

### Résumé de l'invention

L'invention a dès lors pour objectif de remédier aux performances limitées ou contraignantes des systèmes de surveillance, de sécurité ou de suivi existants dont certains décrits plus hauts, en fournissant une installation nouvelle qui pallie, entre autres, les inconvénients des contrôles fixes d'accès ainsi que les limitations des systèmes basés sur la simple détection de présence ou d'absence en des espaces et/ou locaux déterminés, figés et limités mais encore l'obligation d'une gestion centralisée ou le besoin de recourir à une infrastructure non maîtrisée par l'utilisateur. En effet, cette installation nouvelle qui fonctionne tant à l'intérieur qu'à l'extérieur, permet à tout individu, animal ou dispositif de surveillance de vérifier à tout moment, en tout endroit du lieu couvert par l'invention et de façon simple si une personne, un animal ou un objet peut être présent ou à ne pas être présent ou, encore, peut être présent mais sous conditions, à un endroit quelconque du lieu surveillé. L'invention prévoit également de signaler si la personne, l'animal ou l'objet sort du périmètre de contrôle du lieu couvert par l'invention.

L'invention apporte également une solution à un souci important de notre époque, à savoir la protection, dans le sens de la sauvegarde, des personnes et des biens, par exemple, en leur signalant les endroits dangereux. Elle permet donc d'atteindre deux objectifs principaux : la sécurité, la surveillance et le suivi des déplacements des objets, des équipements, des biens, des animaux et des personnes mais également la protection (la sauvegarde) de ces mêmes objets, équipements, biens, animaux et personnes vis-à-vis du lieu ou de l'environnement où ils se trouvent.

L'invention est basée sur un principe simple : la personne, l'animal, le bien, l'équipement ou l'objet à surveiller est pourvu d'un dispositif capable de se positionner dans l'espace qui signale par l'émission d'un ou plusieurs effets, par exemple, l'allumage d'une source lumineuse et/ou l'émission d'un signal sonore - liste exemplative et non exhaustive, l'autorisation dont bénéficie l'objet, le bien, l'équipement, l'animal ou la personne qui le porte. L'effet ou les effets émis étant perceptibles non seulement au porteur lui-même dudit dispositif mais également aux autres personnes, animaux ou êtres vivants présents dans le lieu ainsi qu'à des machines dont celles destinées à la surveillance des lieux (caméras, capteurs, détecteurs, etc.), permettent à ces derniers de constater immédiatement et de façon évidente l'autorisation ou les restrictions d'autorisation auxquelles est soumis l'objet, l'équipement, le bien, l'animal ou la personne dans le lieu et cela quelque soit l'endroit (et non limité à des endroits de contrôle) pour autant qu'il se situe dans l'enceinte couverte par l'invention.

La réalisation concrète et technique de l'invention peut être exécutée de plusieurs façons selon le degré de perfectionnement et de sophistication de son installation.

L'invention est définie par les revendications attachées.

Dans l'installation selon l'invention, nous désignons par le vocable « badge » tout autant un badge au sens propre du terme porté par une personne, un animal ou un objet qu'un objet de toute nature, forme et dimension - la nature, les formes et les dimensions de l'objet n'étant pas critiques pour l'invention - pouvant être apposé sur un bien, un équipement, un objet, un animal, une personne, un emballage, un support, une attache ou, encore, une pièce ou un accessoire vestimentaire. Dans certains cas, le badge pourra être intégré à ces mêmes objets ou êtres vivants. Pour la réalisation concrète de l'invention, on a évidemment cherché à réduire au minimum le volume du dispositif contenu dans le badge ainsi que sa consommation énergétique tant en fonctionnement, qu'en pause ou au repos.

L'expression « source de rayonnement énergétique » désigne de manière générale, tout moyen susceptible de générer un travail. Elle englobe notamment les sources de rayonnement acoustique, les sources de rayonnement électromagnétique, les sources radioactives, les sources d'énergie hydraulique et les sources d'énergie calorifique, ainsi que des organes mécaniques ou électriques susceptibles de générer une instruction pour le pilotage d'un mécanisme présent sur le badge ou à l'extérieur de celui-ci auquel il est relié de manière physique ou par un moyen de communication sans fil (liste exemplative, non exhaustive).

L'expression « communication sans fil » désigne tout moyen de transférer des signaux ou des données sans l'intervention d'une connexion mécanique ou matérielle par fils, câbles ou similaire. Ce moyen de communication est, la plupart du temps, basé sur la transmission d'une onde énergétique telle les ondes acoustiques ou électromagnétiques. La définition d'une liaison par onde énergétique reprise ci-après peut également s'appliquer à l'expression « communication sans fil ».

On préfère, selon l'invention, sélectionner la source de rayonnement énergétique parmi les sources de rayonnement acoustique et les sources de rayonnement électromagnétique. Dans le cas d'une source de rayonnement acoustique, celle-ci peut être une source d'ultrasons, lorsque le badge est destiné à être repéré par un récepteur sensible aux ultrasons ou par un animal sensible aux ultrasons (par exemple un chien dressé en sorte de réagir aux ultrasons). On préfère généralement utiliser une source sonore dans la gamme des fréquences audibles par l'oreille humaine. Dans le cas d'une source de rayonnement électromagnétique, celle-ci est avantageusement une source lumineuse. Il peut s'agir d'une source de lumière monochromatique ou polychromatique ou d'un rayon laser. Des sources de rayonnement non visibles (par exemple dans les spectres de l'infrarouge ou de l'ultraviolet) entrent dans le cadre de l'invention. De manière générale, on préfère, selon l'invention, sélectionner les sources de rayonnement énergétique parmi celles qui peuvent provoquer un effet perceptible par les êtres vivants mais également par des détecteurs ou machines quelconques dont celles destinées au comptage, au suivi ou, encore, à la surveillance et/ou la sécurité des lieux. Ces effets pourront être émis par le badge lui-même ou par un « périphérique », à savoir tout élément piloté par ledit badge et y relié de manière physique ou au moyen d'une technique de communication sans fil et muni d'une ou plusieurs sources de rayonnement énergétique. Dans un souci de simplification du texte, nous désignerons par le terme « porteur », les objets, équipements, biens, emballages, supports, attaches, pièces ou accessoires vestimentaires, animaux et personnes qui sont équipés du badge susmentionné et comme défini ci-avant. L'expression « badge déplaçable » désigne un objet matériel dont la position est sujette à des variations programmées ou aléatoires. La rapidité de ces variations n'est pas critique pour l'invention.

L'organe d'actionnement a pour fonction d'activer la ou les sources de rayonnement énergétique. Il comprend une mémoire et est généralement multifonctionnel, ce qui signifie qu'il est conçu pour agir sur un ou plusieurs paramètres de la ou des sources de rayonnement énergétique, selon un programme opératoire défini, contenu dans sa mémoire. Dans le cas particulier d'une source de rayonnement acoustique ou électromagnétique, ces paramètres comprennent l'activation, la fréquence et l'intensité de la source de rayonnement. Un exemple explicatif simplifié de programme opératoire comprend l'allumage d'une source lumineuse lorsque le badge se situe dans un lieu où il ne peut être présent. Des exemples détaillés de programmes définis seront exposés plus loin.

Le programmateur a pour fonction de confectionner le programme opératoire précité et de le communiquer à la mémoire de l'organe d'actionnement. La confection du programme opératoire est normalement réalisée par un opérateur. Le programme opératoire peut être confectionné en combinant une série d'instructions diverses. On peut aussi, selon une forme de réalisation particulière de l'invention, sélectionner le programme opératoire au départ de quelques programmes préétablis et préenregistrés dans le programmateur. A cet effet, dans une forme de réalisation préférée de l'installation selon l'invention, le programmateur contient plusieurs programmes préenregistrés et un dispositif pour la sélection, au choix, de l'un de ces programmes préenregistrés qui est alors le programme opératoire cité plus haut. Par la suite, l'expression « programme opératoire » désignera le programme qui se trouve dans la mémoire de l'organe d'actionnement de la source de rayonnement énergétique du badge et qui pilote le fonctionnement de cet organe d'actionnement. L'expression « programme préétabli » désignera un programme confectionné par un opérateur (une personne physique ou un groupe de personnes physiques) et l'expression « programme préenregistré » désignera un programme préétabli, enregistré dans le programmateur. Le programmateur peut être déplaçable ou fixe, le vocable « déplaçable » ayant la même définition que celle qui a été fournie plus haut, pour les définitions du badge déplaçable. Comme on l'a exposé plus haut, la mémoire de l'organe d'actionnement de la ou des sources de rayonnement énergétique du badge déplaçable contient un programme opératoire. Ce programme opératoire sert à piloter l'organe d'actionnement de la ou des dites sources de rayonnement énergétique et permet donc au badge de réagir de façon autonome. Il a été confectionné dans le programmateur par un assemblage d'instructions (programme préétabli) ou il a été sélectionné parmi une liste de programmes qui ont été préalablement enregistrés dans le programmateur (programme préenregistré). Le programme opératoire et, le cas échéant, les programmes préenregistrés contiennent dès lors une série d'instructions qui dépendent du badge déplaçable proprement dit, de sa destination et de sa fonction, de l'installation dans laquelle il va être utilisé mais aussi du porteur auquel il est destiné. Citons, par exemple, les autorisations dont bénéficie son porteur, la fréquence de calcul de localisation qui peut aller de plusieurs fois par seconde à une périodicité de plusieurs jours, mois voire années, les clés et la méthode de cryptage des messages qu'il reçoit et, le cas échéant, qu'il pourrait émettre mais également l'attribution d'un identifiant unique dans l'installation qui peut être ou ne pas être en relation avec un éventuel identifiant unique qui aurait été fixé lors de sa fabrication ou, en tout cas, avant sa mise à disposition sur le marché. A titre d'exemple, le badge du Directeur Général d'une entreprise lui permettra de se rendre dans n'importe quel endroit de l'entreprise tout en le prévenant des endroits présentant un réel danger pour lui-même. A contrario, le badge d'un ouvrier sous-traitant de maintenance signalera partout qu'il n'est pas autorisé à être en ces lieux excepté aux endroits dans lesquels il doit se rendre pour effectuer sa mission (la totalité ou une partie de certains couloirs, halls de fabrication, salles de contrôle du hall de fabrication, commodités, etc.). Dans un même ordre d'idée, le programme opératoire du badge peut contenir des informations propres au porteur du badge pour apporter une réponse à un aspect de la vie pratique, par exemple, au sein d'une entreprise, en qualifiant son porteur au moyen d'un signal lumineux émis par le badge (ou un périphérique que ce dernier contrôle) d'une couleur spécifique pour distinguer les personnes faisant partie du personnel de l'occupant des lieux, des personnes externes chargées d'effectuer un travail précis en sous-traitance et des visiteurs.

L'interface a pour fonction de transférer le programme opératoire susdit du programmateur dans la mémoire de l'organe d'actionnement du badge déplaçable. Il a également pour fonction de transférer leurs paramètres aux balises dont la définition sera donnée ci-après. L'interface peut être déplaçable ou fixe, le vocable « déplaçable » ayant la même définition que celle qui a été fournie plus haut, pour la définition du badge déplaçable. Par ailleurs, l'interface peut être reliée de manière amovible ou de manière inamovible au programmateur. Dans le cas d'une liaison inamovible, le programmateur peut faire partie intégrante de l'interface. On préfère toutefois, selon une variante de l'invention, que le programmateur soit séparé de l'interface et qu'il y soit relié de manière amovible, pour pouvoir en être désolidarisé. Toute interface appropriée pour le transfert de signaux contenant des données ou des instructions peut convenir, dans le cadre de l'invention. La sélection de l'interface la plus appropriée va dépendre du badge déplaçable et du programmateur et elle peut être différente selon que le programmateur est déplaçable ou fixe, selon que l'interface est déplaçable ou fixe et selon que l'interface est reliée de manière amovible ou de manière inamovible au programmateur.

La balise a pour fonction d'envoyer périodiquement une onde énergétique qui va être captée par le récepteur d'ondes énergétiques du badge déplaçable. A cette fin elle est munie d'une horloge qui établira le cadencement de l'émission de l'onde énergétique et d'une mémoire qui contiendra un certain nombre de paramètres tels la périodicité de l'émission, la puissance à laquelle elle émet, son identifiant unique au sein de l'installation, les clés et la méthode de cryptage utilisée dans les messages ainsi que des données qui seront transmises dans le signal qu'elle émet. L'onde énergétique émise par la balise contiendra des données qui, entre autres, permettront au badge d'identifier la balise et de calculer sa position par rapport à la balise. Le programme opératoire du badge pourra tenir compte de cette donnée de positionnement pour agir sur l'organe d'actionnement de la source de rayonnement conformément aux instructions contenues dans la mémoire. L'alimentation de la balise pourra être réalisée par toute source d'énergie électrique externe dont le réseau électrique de distribution. Toutefois, on préférera, en sus, équiper la balise d'une source en énergie autonome, une batterie ou une pile, par exemple, qui assurera l'alimentation de la balise en cas de panne de la source d'énergie électrique externe. De cette manière, l'ensemble de l'installation demeurera fonctionnel même en ces circonstances. Dans une variante de l'invention, il est prévu que la balise émette son signal d'onde énergétique sur une commande issue, par exemple du programmateur ou de l'interface.

Le programmateur a également pour fonction de régler les paramètres de la ou chaque balise dont la puissance d'émission de la balise puisque cette dernière est réglable - en temps réel ou en différé, l'identifiant unique de la balise au sein de l'installation qui peut être ou ne pas être en relation avec un éventuel identifiant unique qui aurait été fixé lors de sa fabrication ou, en tout cas, avant sa mise à disposition sur le marché, la ou les clés de cryptage ainsi que la méthode de cryptage des messages qu'elle émet ou, le cas échéant, pourrait recevoir (liste exemplative et non exhaustive).

Selon l'invention, « une liaison par ondes énergétiques » consiste en une transmission d'énergie qui est essentiellement effectuée sans l'intervention d'une connexion matérielle par fils, câbles ou similaire. Les ondes énergétiques réalisant cette communication peuvent comprendre des ondes sonores. Elles comprennent de préférence des ondes électromagnétiques, spécialement des ondes radioélectriques du type de celles communément utilisées dans les liaisons radio. Les ondes VHF et UHF conviennent bien. Les liaisons par rayons laser peuvent également convenir.

Une caractéristiques exemplaire et remarquable de l'invention se dégage déjà à la suite à ces définitions, à savoir que le badge déplaçable est actif et autonome dans son comportement. Cette caractéristique exemplaire et remarquable permet à l'invention d'offrir des fonctions impossibles à réaliser quand l'objet ou l'être déplaçable est équipé d'un dispositif passif et/ou dépourvu de toute fonctionnalité d'intelligence et/ou logique artificielle.

Dans une forme de réalisation avantageuse de l'invention, on peut adjoindre au programme opératoire, une table de spatialisation et/ou une table de topographie. La table de spatialisation comporte une série de paramètres qui sont activés sélectivement pour piloter l'organe d'actionnement du badge déplaçable, en réponse aux consignes transmises par la balise et relatives aux coordonnées spatiales du badge déplaçable. Sous l'effet de ce pilotage, la ou les sources de rayonnement énergétique vont produire un travail défini par l'organe d'actionnement, en fonction des coordonnées spatiales relatives dudit badge déplaçable. La table de topographie comporte une série de paramètres qui sont activés sélectivement pour piloter l'organe d'actionnement du badge déplaçable, en réponse aux consignes transmises par la balise et relatifs à des informations en relation avec la topographie des lieux, telles que différents niveaux ou étages d'un immeuble ou des obstacles à la propagation normale des ondes énergétiques. Ces obstacles peuvent, par exemple, comprendre des parois, des escaliers, des plans inclinés, des plafonds surbaissés, des sources de rayonnement énergétique, des statues ou autres décorations, des bacs de plantes, des masses métalliques, des bassins d'eau, des fontaines, etc. Par exemple, dans le cas où la source de rayonnement énergétique du badge déplaçable comprend une source de rayonnement acoustique ou électromagnétique, le pilotage précité va agir sur la fréquence et/ou l'intensité de la source acoustique ou électromagnétique en fonction des coordonnées spatiales du badge déplaçable (dans le cas d'une table de spatialisation) et/ou en fonction de la présence d'un obstacle défini au voisinage du badge déplaçable (dans le cas d'une table de topographie).

Dans une forme de réalisation spécialement avantageuse de l'invention, on équipera l'interface d'un émetteur d'ondes énergétiques qui pourront être captées par le récepteur d'ondes énergétiques du badge. Le transfert du programme opératoire du programmateur dans la mémoire de l'organe d'actionnement du badge déplaçable pourra alors se faire au moyen de cette liaison non physique. Cette forme de réalisation de l'invention présente la particularité qu'elle permet de maintenir une liaison entre le programmateur et la mémoire du badge déplaçable, même dans le cas où on déplace le badge et/ou le programmateur et/ou l'interface. Elle permet de la sorte de modifier en permanence et à volonté le programme opératoire inclus dans la mémoire du badge déplaçable.

Dans une forme d'exécution additionnelle de la forme de réalisation spécialement avantageuse décrite plus haut, l'installation comprend, en outre, un dispositif de contrôle, conçu pour transférer via l'interface et/ou les balises des instructions ponctuelles à l'organe d'actionnement du badge déplaçable en sus de celles de sa mémoire ou après court-circuitage de celle-ci. Cette forme de réalisation de l'invention implique que la ou chaque balise et/ou l'interface comprennent des émetteurs d'ondes énergétique. Dans cette forme d'exécution additionnelle de l'invention, l'installation permet une coopération dudit dispositif de contrôle avec un badge déplaçable spécifique défini par un numéro de série pour transférer des instructions à ce badge déplaçable et envoyer à ce dernier des consignes spécifiques, pour adapter la fonction de l'organe d'actionnement de la ou des sources de rayonnement énergétique en fonction de diverses circonstances qui n'auraient pas été préprogrammées telles que, par exemple, la position spatiale ou géographique du badge déplaçable, l'apparition d'un phénomène inattendu ou particulier, la survenance d'une information locale ou fortuite, une variation de la pression ou de la température ambiante, ou de l'éclairage ambiant (liste exemplative, non exhaustive). Un exemple pratique d'utilisation de cette caractéristique de l'invention peut être évoqué lors de la recherche d'un objet de petite taille parmi une multitude d'objets. Ce cas se présente fréquemment dans les halls de regroupement, répartition et redistribution (« dispatching ») des entreprises de logistique. Quand cela arrive, on peut utiliser le dispositif de contrôle susmentionné pour envoyer au badge de l'objet concerné l'ordre d'émettre à faible puissance (pour ne pas encombrer les bandes de fréquence et/ou perturber une partie de l'installation) et à intervalle très court, un message spécifique d'identification. Pour améliorer encore l'aide à la recherche, on peut, par exemple, faire en sorte que le badge émette un rayon lumineux clignotant. En étant équipé d'un récepteur qui va capter ledit message spécifique, on pourra facilement et rapidement préciser l'endroit où se trouve l'objet recherché et identifier ce dernier par le signal lumineux clignotant qu'il émet. Une fois que ce dernier est retrouvé, on pourra demander audit dispositif de contrôle d'envoyer au badge de l'objet retrouvé l'ordre de revenir à son mode normal de fonctionnement selon le programme opératoire actif dans la mémoire de son dispositif d'actionnement.

Dans une variante préférée de la forme d'exécution additionnelle de la forme de réalisation spécialement avantageuse décrite ci-dessus, le dispositif de contrôle susmentionné pourra être intégré au programmateur.

Dans une variante particulièrement avantageuse d'exécution de l'invention, les fonctions de l'interface pourront être reprises (en tout ou en partie) par la ou chaque balise. De cette manière, on regroupe ces fonctions en un seul élément de l'installation. Dans ce cas, l'interface utilisera avantageusement l'émetteur d'ondes énergétiques de la balise pour transférer les programmes opératoires au badge déplaçable. Dans la variante particulièrement avantageuse d'exécution de l'invention décrite ci-dessus, on pourra donc, à tout instant, remplacer le programme opératoire actif du badge déplaçable par un autre programme opératoire. De même, cela permettra d'envoyer une commande directe au badge déplaçable qui, le cas échéant, pourra être prioritaire par rapport au programme opératoire.

Dans une forme de réalisation additionnelle de la variante particulièrement avantageuse d'exécution de l'invention citée ci-dessus, la liaison entre le programmateur et la ou chaque balise et ou/interface qui est fixe peut être réalisée de manière physique. Cette liaison physique permet non seulement le transfert de données mais également l'apport en énergie à ces éléments. Cette forme de réalisation additionnelle de l'invention permet également de modifier à tout moment les paramètres de la ou chaque balise. Dans une version simplifiée de cette forme d'exécution additionnelle de l'invention, on a prévu que la ou chaque balise se limite à un simple émetteur banalisé qui relaierait un signal confectionné en temps réel par le programmateur auquel elle est reliée. Dans ce cas, la ou chaque balise n'est plus munie ni d'une batterie, ni d'une mémoire ni d'une horloge excepté si le degré de fiabilité et de garantie de fonctionnement de l'installation exige que la ou chaque balise reste opérationnelle même en cas de rupture de la liaison physique avec le programmateur.

Dans une autre variante additionnelle particulièrement avantageuse d'exécution de l'invention, le badge déplaçable peut éventuellement comprendre un émetteur d'ondes énergétiques et la ou chaque balise et/ou l'interface peut éventuellement comprendre un récepteur d'ondes énergétiques. Dans cette variante de réalisation de l'invention, l'émetteur-récepteur du badge déplaçable et l'émetteur-récepteur de la balise et/ou de l'interface peuvent dialoguer de telle sorte que l'organe d'actionnement précité du badge déplaçable réagisse à des signaux de la balise, lesdits signaux étant pilotés au départ d'informations transférées par l'émetteur du badge déplaçable au récepteur de la balise et/ou de l'interface. De même, la balise et/ou l'interface peuvent communiquer les informations transmises par le badge à une unité de traitement (99) pour y être mémorisées à des fins diverses dont, par exemple, l'établissement des statistiques ou de l'historique des déplacements des badges déplaçables et/ou exploitées, par exemple, pour modifier les signaux émis par la balise.

Par « unité de traitement », nous désignons un appareil capable de mémoriser des données ainsi que d'effectuer des opérations mathématiques ou de logique et d'exécuter des instructions préenregistrées (des programmes informatiques) en utilisant ces données. Cet appareil sera avantageusement équipé des interfaces nécessaires pour communiquer avec les êtres humains mais aussi avec d'autres machines. Un micro-ordinateur conviendra parfaitement pour assurer les fonctions que l'unité de traitement doit remplir.

Dans l'installation selon l'invention, le badge déplaçable peut éventuellement comprendre, un ou plusieurs capteurs dont la fonction technique consiste à permettre au programme opératoire précité, enregistré dans sa mémoire, de réagir de manière autonome sur l'organe d'actionnement de la ou des sources de rayonnement énergétique du badge déplaçable, en réponse à des paramètres locaux (par exemple l'intensité lumineuse des lieux, une modification de cette intensité lumineuse, une modification de la température de l'environnement ou, dans le cas d'un badge à proprement parler, d'un paramètre physiologique de son porteur). En variante, le programme opératoire peut être conçu pour transférer ces paramètres locaux aux balises et/ou à l'interface, de façon à pouvoir recevoir des consignes particulières de pilotage de l'organe d'actionnement de la source de rayonnement énergétique du badge déplaçable. Comme cela a été dit plus haut, ces paramètres pourront avantageusement être transmis à l'unité de traitement pour être mémorisées à des fins diverses et/ou exploitées en temps réel, par exemple, pour envoyer des secours si les paramètres physiologiques du porteur signalait, par exemple, qu'il est sujet à malaise grave (crise cardiaque, crise d'épilepsie, etc.) ou si un des paramètres physiques et/ou chimiques de l'environnement du porteur présentait une valeur anormale. Cette forme de réalisation de l'invention rencontre le souci d'améliorer la protection des personnes, des êtres vivants, des biens ou des objets en surveillant certains paramètres chimiques et/ou physiques et/ou, encore, le cas échéant, physiologiques et en prévenant le porteur lui-même, son entourage ou une centrale de surveillance si la valeur d'un des paramètres audités venait à s'écarter de la normale.

Dans une autre forme de réalisation additionnelle de l'installation selon l'invention, le badge déplaçable comprend une seconde mémoire qui a pour fonction de mémoriser et stocker des paramètres de l'environnement dudit badge déplaçable, obtenus au moyen de capteurs ou d'autres moyens équivalents, ainsi que la position spatiale dudit badge par rapport à une ou plusieurs balises, ladite seconde mémoire étant adaptée à être lue par l'interface. Cette forme de réalisation additionnelle de l'installation permet une traçabilité du badge et donc de son porteur. Elle permet de réaliser une surveillance du déplacement du badge et trouve dès lors une application pour assurer la traçabilité du badge ou la sécurité du badge et/ou de son utilisateur et/ou de son environnement. Dans certains cas, le badge pourra prendre l'initiative de communiquer à l'unité de traitement, via l'interface et/ou les balises, les données contenues dans cette deuxième mémoire ou transmettre directement et en temps réel à l'unité de traitement via l'interface et/ou les balises les données qu'il collecte.

Dans une forme particulière de la variante additionnelle particulièrement avantageuse d'exécution de l'invention décrite ci-avant, on peut relier l'unité de traitement à un dispositif de visualisation de dessins cartes ou plans pour y représenter, en temps réel ou en temps différé, les déplacements des porteurs du badge dans le lieu contrôlé par l'installation ainsi que les événements spécifiques signalés par le badge. Par l'exploitation de ces données dont celles de localisation, elle apporte donc, aux personnes concernées, des éléments supplémentaires dans leur enquête au niveau de la recherche de l'auteur ou de la cause d'un événement, d'un accident ou d'un méfait. L'invention a également prévu de réagir et signaler si un porteur devait quitter la zone qui est sous le contrôle de l'installation.

Dans une forme préférée d'exécution de l'invention, on intégrera, à l'unité de traitement, les fonctions du programmateur ainsi que celles du dispositif de contrôle destiné à envoyer des commandes spécifiques aux badges.

Dans une autre forme de la variante additionnelle particulièrement avantageuse d'exécution de l'invention décrite ci-avant, on pourra ajouter au badge déplaçable un micro ainsi qu'un diffuseur de son (un écouteur ou une oreillette, par exemple) qui permettront au porteur du badge de dialoguer avec un autre ou plusieurs autres porteurs en utilisant les signaux d'ondes énergétiques échangées entre le badge et l'interface et/ou les balises. Chaque badge déplaçable disposant d'un identifiant qui lui est propre, les signaux audio d'un badge pourront être identifiés aussi de manière unique, ce qui permettra de les distinguer. Il sera donc possible à l'installation de véhiculer plusieurs conversations audio sans les mélanger tout comme d'établir une communication commune entre plusieurs porteurs. La gestion des communications audio pourra être réalisée par l'unité de traitement. Une variante de l'invention prévoit d'étendre la technique décrite ci-dessus pour les communications audio à des communications d'autres types de signaux telles les communications d'images, de films, de fichiers ou données informatiques (liste exemplative, non exhaustive) en équipant le badge des périphériques ad hoc.

Dans une autre variante additionnelle spécialement avantageuse de sa forme de réalisation, l'invention prévoit un moyen de contrôle permettant de détecter la correspondance entre le dispositif de surveillance (le badge) et son porteur. Ce principe évite à un intrus de pouvoir s'approprier les autorisations d'un porteur en lui subtilisant ou substituant son badge. Une méthode avantageuse prévue par l'invention, consiste à coupler le badge à un autre objet, un RFID, par exemple, dont on équipe le porteur du badge (ou que l'on intègre au porteur du badge) et qui est propre à ce porteur (identifiant unique). Dans ce cas, le badge, vérifiera régulièrement la présence et la proximité de cet objet pour voir si l'objet ou lui-même n'a pas été dérobé à son porteur. Si le badge constate qu'il n'est plus couplé avec l'objet en question, il se mettra en alarme permanente et transmettra également cette alarme à l'unité de traitement mentionnée ci-avant à l'aide de l'émetteur dont il est équipé via les balises et/ou l'interface. Ce mode de réalisation sera particulièrement avantageusement utilisé quand le badge n'est pas intégré de façon solidaire à son porteur car il rend ainsi quasi impossible l'usurpation d'identité de son porteur. Par « RFID », nous désignons de petits objets comprenant une antenne associée à une puce électronique contenant des données dont un identifiant unique. Ces petits objets peuvent recevoir une requête par onde radio émise par un émetteur-récepteur à laquelle ils répondent en émettant les données contenues dans la puce électronique dont leur identifiant.

Dans le cas où le porteur du badge est un être humain, un mode de réalisation spécialement avantageux de l'autre forme de la variante additionnelle particulièrement avantageuse d'exécution de l'invention décrite ci-avant consiste à intégrer ce RFID à un sous-vêtement équipé de capteurs de différents types dont ceux mesurant des données physiologiques du porteur. Les capteurs étant connectés à ce RFID, le badge collectera les données de ces capteurs en interrogeant le RFID qu'il pourra traiter de manière autonome et/ou communiquer à l'unité de traitement par l'intermédiaire de son émetteur d'ondes énergétiques et du récepteur d'ondes énergétiques de l'interface et/ou des balises.

Dans une forme particulièrement avantageuse d'exécution de l'invention, les badges peuvent aussi assurer le rôle de balises. La polyvalence fonctionnelle des badges constitue une caractéristique remarquable de l'invention. Cette souplesse est particulièrement intéressante pour améliorer la précision de localisation des badges déplaçables et pour rendre possible certaines réalisations concrètes de l'invention. En effet l'unité de traitement de l'installation pourra aisément distinguer les badges déplaçables qui occupent, durant un moment plus ou moins long, une position fixe. L'unité de traitement peut alors donner l'instruction au badge incriminé d'assurer le rôle de balise. Les badges déplaçables qui reçoivent ce signal supplémentaire disposeront donc ainsi d'une information complémentaire de localisation, ce qui permettra d'améliorer le calcul de leur position. En répétant cette opération avec plusieurs badges, il sera possible d'établir une cartographie encore plus précise des badges et pouvoir arriver à une pixellisation des badges sur un dessin, un plan ou une carte. Cette forme particulièrement avantageuse d'exécution de l'invention peut être également appliquée aux badges déplaçables sujets à un déplacement permanent. Cela permet de réaliser plus aisément certaines mises en pratique de l'invention. Nous décrivons ci-dessous l'exemple d'une variante avantageuse d'exécution de l'invention qui exploite cette polyvalence des badges.

Une particularité importante, exemplaire et remarquable de l'invention consiste à ce que le badge soit autonome tant au niveau du calcul de sa position que des actions que son programme opératoire impose à l'organe d'actionnement. Cependant, la miniaturisation de l'électronique et la minimisation de la consommation énergétique du badge limitent le volume des données mémorisées ainsi que la hauteur de son potentiel en calcul. Aussi, pour palier aux limitations imposées par la technique, une variante avantageuse d'exécution de l'invention, prévoit, si c'est nécessaire, un fonctionnement en travail collaboratif entre le badge et l'unité de traitement afin d'améliorer, entre autres, le calcul de positionnement du badge. Plusieurs méthodes de ce travail collaboratif peuvent être mises en oeuvre. Une première consiste à ce que le badge transmette à l'unité de traitement les données envoyées par les balises qu'il a collectées. L'unité de traitement pourra utiliser ces données dans des calculs statistiques plus sophistiqués qui tiendront compte, entre autres, de plus de données dont celles relatives à l'historique du déplacement du badge, de prévisions théoriques statistiques de position du badge, d'histogrammes des signaux envoyés par la ou les balises et, le cas échéant, des données d'autocontrôle de l'installation pour déterminer avec une nettement meilleure précision la localisation du badge. Ce calcul effectué, l'unité de traitement pourra communiquer au badge des coordonnées plus précises de la position dudit badge, coordonnées que son programme opératoire pourra prendre en compte pour activer l'organe d'actionnement mais également dans le prochain calcul autonome de sa position. En sus des coordonnées résultant du calcul, l'unité de traitement pourra également envoyer au badge des instructions spécifiques ou un nouveau programme opératoire pour remplacer le programme opératoire actif du badge. Une deuxième méthode est calquée sur la première mais préférée dans le sens qu'après son calcul, l'unité de traitement communique au badge ses coordonnées de positionnement mais, le cas échéant, modifie également les tables de topographie et/ou de spatialisation du badge. Avec cette méthode, les données dont dispose le programme opératoire du badge s'améliorent au fur et à mesure de l'utilisation du badge, ce qui fait progresser la précision de ses calculs autonomes de position. La troisième méthode est similaire à la seconde si ce n'est que l'on augmente les données envoyées par le badge à l'unité de traitement. En effet, dans cette méthode, on profite pleinement d'une caractéristique voulue de l'invention, à savoir de la polyvalence des éléments qui composent l'installation. Cette caractéristique multifonctionnelle des éléments de l'invention permet, entre autres, que les badges peuvent servir de balises. Ainsi, le badge concerné peut également écouter les signaux émis par les autres badges et les utiliser de la même manière qu'il utilise les signaux émis pas les balises. Il va donc transmettre ces données à l'unité de traitement qui va les consolider, ce qui permettra à cette dernière de calculer de manière encore plus précise non seulement la position dudit badge mais également celle des autres badges. La quatrième et dernière méthode que nous explicitons ici s'oppose à l'autonomie du badge voulue dans l'invention mais peut être avantageuse dans certains cas d'application. Elle consiste à ce que le badge transmette à l'unité de traitement les données qu'il a récoltées puis que son programme opératoire attende la réception du résultat des calculs de positionnement effectués par l'unité de traitement ainsi que les éventuelles instructions ponctuelles et/ou nouvelle table de spatialisation et/ou nouvelle table de topographie et/ou nouveau programme opératoire pour que son programme opératoire (éventuellement nouveau programme opératoire) agisse sur son organe d'actionnement.

Dans une forme d'exécution spécialement avantageuse des différentes formes et variantes d'exécution de l'invention définies plus haut, l'installation comprend au moins deux balises reliées en réseau (au moyen d'un câblage avec une topologie de type bus (câble partagé) ou en étoile constitué de câbles spécifiques, de câbles de réseau informatique, de câbles du réseau électrique ou au moyen d'une transmission par ondes énergétiques), chaque balise comprenant un émetteur-récepteur d'ondes énergétiques et une mémoire comme exposé plus haut. Par contre, les balises ne doivent plus nécessairement être munies d'une horloge si le cadencement de leur émission est assuré par le dispositif qui gère le réseau. Une méthode de réalisation du réseau comprend un balayage du badge déplaçable, successivement par l'émetteur de chaque balise, agissant individuellement. Par exemple, dans le cas où l'installation comprend, d'une part, cinq badges déplaçables munis chacun d'une source de rayonnement et d'un récepteur et, d'autre part, quatre balises munies chacune d'un émetteur, le récepteur de chaque badge déplaçable (considéré individuellement) est balayé par une succession de quatre signaux individuels, provenant respectivement, successivement et dans un ordre pouvant être prédéfini des balises. Cette variante d'exécution de l'invention n'est toutefois pas limitée à cette méthode de réalisation du réseau, d'autres méthodes connues pouvant lui être substituée, par exemple un réseau dont le protocole permet des collisions. Les balises peuvent être indifféremment toutes fixes ou toutes déplaçables ; en variante, certaines d'entre-elles peuvent être fixes, tandis que d'autres sont déplaçables. Le type de réseau n'est pas critique pour l'invention et celle-ci permet d'utiliser simultanément plusieurs types de réseaux. Le choix du ou des types de réseaux va dépendre de différents éléments dont ceux relatifs à l'environnement dans lequel est exploitée l'invention. La gestion ou la supervision du réseau pourra être assurée par une balise « maître » ou un dispositif spécifique. Dans une forme avantageuse de réalisation de l'invention, la gestion du réseau sera assurée par l'unité de traitement.

Dans une forme additionnelle et particulièrement avantageuse de la variante d'exécution spécialement avantageuse décrite ci-avant, on peut améliorer la protection des personnes et êtres vivants ou objets pourvus d'une intelligence naturelle ou artificielle capable de comprendre les signaux émis par les badges lors de la survenance d'un incident ou d'un sinistre d'un lieu en émettant des signaux perceptibles audits être vivants, personnes ou objets pour les guider vers des issues qui leur permettront de quitter le lieu avec le maximum de sécurité. Une variante de cette forme additionnelle particulièrement avantageuse de réalisation de l'invention prévoit que les badges soient munis d'un diffuseur sonore personnel (tel un écouteur) pour assurer ledit guidage de son porteur par des messages (synthétisés ou préenregistrés) choisis automatiquement par le badge avec, si nécessaire, l'appui de l'unité de traitement et/ou des balises. Une autre variante de cette forme additionnelle et particulièrement avantageuse d'installation de l'invention prévoit d'équiper les balises fixes qui sont visibles d'une ou plusieurs sources de rayonnement énergétique dont l'unité de traitement organisera l'actionnement de façon à indiquer, à l'instar des badges déplaçables comme mentionnés ci-dessus, les chemins dépourvus de danger qui mènent aux issues de l'enceinte couverte par l'invention.

Une exécution particulière de l'installation selon l'invention prévoit que les balises soient équipées de capteurs ou de détecteurs classiques d'incendie, de fumée et/ou de gaz dont les gaz toxiques ou, encore, de détecteurs de mouvement, d'intrusion et d'autres détecteurs de dangers. Cette exécution n'a pas d'autre ambition que d'éviter de multiplier les éléments de sécurité dans les lieux à protéger. Toutefois, l'intégration aux balises de certains capteurs ou détecteurs peut s'avérer pertinente pour déceler quelques cas spécifiques. Par exemple, certains détecteurs volumétriques de présence et/ou mouvement sophistiqués peuvent établir avec une précision relativement bonne le nombre d'êtres ou d'objets qu'ils ont repérés. En comparant ces données avec le nombre de badges présents auprès de la balise munie dudit détecteur, il est donc possible d'établir la probabilité de la présence d'un ou plusieurs intrus et donc de communiquer une alerte spécifique. Quoiqu'il en soit, si les balises sont équipées de détecteurs ou capteurs, elles rendront compte de l'état de ces derniers à l'unité de traitement qui pourra éventuellement relayer cette information vers une ou des centrales dédicacées à la gestion de ce type de capteurs ou détecteurs.

Dans une forme d'exécution supplémentaire de l'installation de l'invention, il est prévu, à l'instar des systèmes basés sur l'utilisation du GPS, de pouvoir demander au badge de guider son porteur vers un endroit déterminé du lieu couvert par l'invention. Ce guidage automatique pourra être réalisé de plusieurs manières suivant les sources de rayonnement énergétique dont est pourvu le badge et/ou le ou les périphériques qu'il contrôle. Une forme préférée va au pilotage par le son, par exemple, sous la forme de messages de guidage simples synthétisés ou préenregistrés et transmis au porteur par l'intermédiaire d'un diffuseur sonore (de préférence personnel, tels un écouteur) ou au pilotage par l'image telle une image de synthèse produite par un écran de visualisation (de préférence portatif et personnel) qui reprend, en temps réel, une plan ou une carte des lieux la position du porteur du badge, la direction à suivre et, selon l'échelle du schéma, la destination.

Dans une variante d'exécution supplémentaire de la forme de réalisation spécialement avantageuse décrite plus haut, la liaison par ondes énergétiques entre l'émetteur (ou, le cas échéant, l'émetteur-récepteur) de l'interface et le récepteur (ou, le cas échéant, l'émetteur-récepteur) d'une ou de plusieurs balises passe par au moins un relais de transmission équipé d'un émetteur-récepteur d'ondes énergétiques (par exemple un relais d'ondes hertziennes). Cette variante de l'invention trouve un intérêt dans le cas d'installations dont l'interface et/ou les balises sont destinées à être disposées ou déplacées sur un domaine de grande superficie ou qui présente des obstacles naturels ou artificiels à la propagation des ondes énergétiques. Dans une forme de réalisation spécifique de la variante d'exécution supplémentaire de la forme de réalisation spécialement avantageuse décrite plus haut, la fonction de relais peut être assurée par une ou plusieurs balises.

Dans une forme de réalisation spécifique de l'installation selon l'invention, la source de rayonnement énergétique du badge déplaçable comprend un relais. Dans cette forme de réalisation de l'invention, le relais est destiné à actionner un mécanisme présent sur le badge déplaçable ou séparé de celui-ci, en réponse à une instruction provenant de l'organe d'actionnement.

Dans une forme de réalisation additionnelle de l'invention, l'installation comprend une unité de marquage des badges déplaçables et de leurs périphériques, y compris les RFID associés aux badges déplaçables. Dans cette forme additionnelle de réalisation de l'invention, il peut se révéler avantageux que l'installation comporte aussi une unité de marquage de ses autres constituants, tels l'unité de traitement, le programmateur, l'interface et/ou les balises,. etc. Cette forme de réalisation particulière de l'invention permet de distinguer les éléments d'une installation conforme à l'invention, des éléments correspondants d'une autre installation conforme à l'invention. Elle évite ainsi qu'un élément d'une installation définie (par exemple un badge ou une balise) puisse être substitué par un élément correspondant d'une autre installation. L'invention a également prévu une procédure qui permette à des éléments marqués différemment de pouvoir être utilisés simultanément dans une même installation comme s'ils étaient tous marqués de la même façon.

Dans une variante particulière de réalisation de l'invention, on peut ajouter des balises passives (par opposition aux balises actives équipées d'un émetteur actif indépendamment de la présence de badges), par exemple, des RFID passifs, ou remplacer (en tout ou en partie) les balises actives par des balises passives qui seront moins coûteuses. Dans ce cas, ce sera le badge qui ira lire les informations de la balise passive pour l'identifier. Le programme opératoire tiendra compte de ces données de la même manière qu'il utilise les données émises par les balises active. L'avantage de cette variante particulière de l'invention est que l'on pourra augmenter le nombre de balises à moindre frais tout en améliorant la précision de calcul de la position du badge.

Dans une autre forme de réalisation avantageuse de l'invention, on pourra équiper les badges et/ou l'interface et ou/les balises et/ou les relais de transmission de plusieurs antennes d'émission et/ou réception orientées de différentes manières de façon à pallier la directivité du champ d'émission et de réception des antennes ainsi que le comportement des ondes énergétiques en milieu confiné et ainsi améliorer la communication mais également la précision de positionnement des badges déplaçables.

Dans une forme de réalisation particulièrement avantageuse de l'invention, les badges et/ou l'interface et/ou les balises utilisent différentes bandes de fréquences et/ou conjointement plusieurs bandes de fréquences de l'onde énergétique et/ou, encore, conjointement plusieurs types d'ondes énergétiques pour l'émission et la réception des signaux. Cette particularité permet d'augmenter le nombre et/ou la vitesse des signaux émis ou échangés. Dans cette forme de réalisation avantageuse de l'invention, les badges et/ou l'interface et/ou les balises pourront être équipés de plusieurs émetteurs et/ou récepteurs adaptés à cette forme de réalisation. Cette forme de réalisation particulièrement avantageuse de l'invention permet également à l'installation de rester fonctionnelle même si un phénomène extérieur venait à utiliser et donc perturber une partie des bandes de fréquences des ondes énergétiques utilisées dans une installation. L'invention prévoit que l'installation change automatiquement les bandes de fréquences qu'elle utilise pour éviter les bandes de fréquence sujettes à de telles perturbations. Ces changements pourront faire l'objet d'une journalisation dans l'unité de traitement.

Dans une forme d'exécution particulièrement avantageuse de l'invention, il est prévu que l'installation se calibre automatiquement au niveau du réglage des paramètres liés à la transmission des ondes énergétiques. Il est également prévu que l'installation modifie automatiquement lesdits réglages de manière s'adapter aux perturbations extérieures mais également, le mieux possible, aux modifications ponctuelles et/ou non planifiées d'agencement des lieux et signaler par une alerte si cette procédure automatique est rendue impossible pour quelque raison que ce soit. Ce calibrage automatique sera géré par l'unité de traitement qui se servira des signaux et données qu'elle reçoit des différents éléments de l'installation en mode normal d'utilisation mais également de données qu'elle collectera spécifiquement à cette fin en commandant certaines actions spéciales aux constituants de l'installation sans toutefois en perturber le fonctionnement normal. L'adaptation des paramètres par cette fonction de calibrage automatique sera toutefois volontairement limitée afin que l'installation ne vienne pas corriger un dysfonctionnement ou une tentative de sabotage d'un de ses constituants sans déclencher une alerte. Les adaptations des paramètres susmentionnés pourront faire l'objet d'une journalisation dans l'unité de traitement.

L'invention prévoit que, de manière permanente ou cyclique, selon l'importance de cette fonction dans la cadre de l'utilisation de l'invention, l'installation contrôle le bon fonctionnement de tous les éléments qui la constituent. Cette fonction sera assurée et gérée par l'unité de traitement qui signalera tout dysfonctionnement en émettant une alerte en adéquation avec le problème rencontré. Cette fonction a également pour objectif de déceler les éventuelles tentatives de sabotage ou de contournement dont l'installation pourrait faire l'objet. Les badges déplaçables ainsi que tous les éléments de l'installation effectueront également, pour leur compte, cette fonction d'autocontrôle, notamment, pour ceux qui sont pourvu d'une source d'énergie autonome, la surveillance de la réserve d'énergie qui reste dans ladite source d'énergie autonome. Si besoin est, l'élément qui constate un problème transmettra une alerte à l'unité de traitement. Dans le cas du badge déplaçable, ce dernier émettra un effet d'alerte local pour prévenir son porteur ou toute autre personne de son entourage. Tous ces contrôles et alertes pourront faire l'objet d'une journalisation dans l'unité de traitement.

L'invention prévoit de synchroniser périodiquement sa propre horloge ainsi que celle des éléments qui la constituent et qui sont pourvus d'une horloge ou d'un système de comptage lié au temps. Si l'unité de traitement est reliée à une source de temps telle une horloge atomique ou un serveur de temps, elle recourra au service de temps de cette source de temps pour synchroniser sa propre horloge avant de synchroniser celle des autres éléments.

Dans l'installation selon l'invention, il est prévu plusieurs cas d'émissions d'alertes. L'invention prévoit de signaler ces alertes autant selon les méthodes traditionnelles tel l'affichage sur un écran, l'allumage d'un témoin d'alerte ou l'émission d'un son émis par un diffuseur, un klaxon ou une sirène que les nouvelles méthodes qui utilisent les moyens de télécommunication modernes (alerte par message écrit ou vocal sur un téléphone fixe ou portable, sur le pose de travail informatique d'un responsable ou d'un opérateur, etc.). Si les alertes sont émises vers un site distant, les procédures d'autocontrôle prévoiront la vérification du bon fonctionnement des moyens de communication qui relient l'unité de traitement de l'installation et l'infrastructure de traitement du site distant tout comme l'infrastructure du site distant vérifiera en permanence ou régulièrement le bon fonctionnement de l'unité de traitement de l'installation et, par conséquent, le bon fonctionnement global de l'installation. Il va de soit que les moyens de communications utilisés feront l'objet d'une attention particulière en ce qui concerne leur sécurité. L'ensemble des alertes émises par l'installation pourront faire l'objet d'une journalisation dans l'unité de traitement.

Une variante d'exécution de l'invention, prévoit, entre autres pour les installations importantes, que l'unité de traitement peut être constituée de plusieurs unités de traitement reliées en réseau. L'organisation des unités de traitement peut être basée tant sur une répartition géographique qu'une répartition des fonctions. Le type de réseau qui relie les unités de traitement n'est pas critique pour l'invention. Le choix du type du réseau dépendra de la topologie du réseau mais également de celle des lieux et de l'environnement.

Une forme spécifique de réalisation de l'invention prévoit que les données de localisation des badges et des autres éléments de l'installation dont l'installation connaît les données de localisation (les balises, par exemple), peuvent être formulées en termes de coordonnées géographiques absolues (latitude et longitude) en indiquant à l'unité de traitement les coordonnées géographiques absolues de deux points fixes situés dans le lieu couvert par l'installation (deux balises fixes, par exemple) ou, encore, les coordonnées géographiques d'un seul point fixe et un axe d'orientation. Au cas où l'installation se situerait sur un lieu mobile (un bateau, par exemple), il faudra que l'installation soit complétée de deux récepteurs GPS qui seront disposés en des endroits fixes par rapport au lieu couvert par l'installation et qui devront être reliés à l'unité de traitement afin que celle-ci puisse tenir compte des coordonnées géographiques variables dans le temps de ces deux points de référence dans son calcul de transposition des données de localisation locales d'un moment déterminé en coordonnées géographiques absolues.

Dans l'installation selon l'invention, le badge déplaçable doit être équipé d'un générateur autonome d'électricité, pour assurer notamment le fonctionnement de son organe d'actionnement. De manière similaire, dans le cas où le programmateur est déplaçable, il doit normalement être équipé d'un générateur autonome d'électricité. Il en va de même pour l'interface si celle-ci est déplaçable ou dissociable du programmateur ainsi que de certaines balises. Le générateur autonome d'électricité du badge déplaçable et, le cas échéant, du programmateur et/ou de l'interface et/ou de la balise n'est pas critique pour la définition de l'invention. Son choix va dépendre de divers paramètres, tels que la nature, la forme, les dimensions et la destination du badge déplaçable (et, le cas échéant, du programmateur et/ou de l'interface et/ou de la balise). Il peut être un générateur de courant alternatif ou un générateur de courant continu. En fonction des circonstances, le générateur autonome d'électricité peut, par exemple, être choisi parmi les piles électriques, les piles à combustible et les accumulateurs électriques (tels que les condensateurs et les batteries électriques rechargeables). Lorsqu'ils sont fixes, le programmateur et l'interface peuvent être équipés d'un générateur autonome d'électricité ou être reliés au réseau de distribution électrique ou alimentés par le câble de liaison avec l'unité de traitement. Dans une forme de réalisation particulière de l'installation selon l'invention, l'interface précitée comprend un couplage électrique franc ou par induction dont la mise en application est connue et une liaison par ondes énergétiques (faisant intervenir une ou plusieurs balises et éventuellement un ou plusieurs relais, ces éléments ayant été définis et explicités plus haut). Cette forme de réalisation est bien adaptée aux installations qui comprennent des accumulateurs électriques rechargeables et des unités de marquage de ses constituants. Le couplage électrique franc ou par induction sert alors à réaliser le marquage des constituants et à coupler les accumulateurs électriques à un chargeur électrique, tandis que la liaison par ondes énergétiques sert à mettre le programmateur en communication avec la mémoire de l'organe d'actionnement du badge déplaçable. Dans une forme de réalisation modifiée, le couplage électrique franc ou par induction sert également à mettre le programmateur en communication avec la mémoire de l'organe d'actionnement du badge déplaçable. Dans cette forme de réalisation modifiée de l'invention, le couplage électrique est utilisé pour transférer un programme opératoire dans ladite mémoire, au départ d'un programme préétabli et préenregistré dans le programmateur, tandis que la liaison par balises et ondes énergétiques sert, pendant l'utilisation de l'installation, à adapter, en temps réel, ce programme opératoire ou à lui envoyer des consignes spécifiques à des circonstances locales telles que la pression et la température ambiante, la lumière ambiante, la position spatiale du badge déplaçable, la présence d'obstacles naturels ou artificiels, la topographie des lieux (liste exemplative, non limitative).

Pour l'électronique de l'installation selon l'invention, on choisit de préférence des composants de petites dimensions et à faible consommation d'énergie. L'invention permet ainsi de miniaturiser les composants de l'installation et de réduire sa consommation électrique, tant durant son activité qu'au repos. L'électronique du badge est conçue de telle façon modulaire avec la particularité que chaque module fonctionnel peut être distinctement mis en veille. La conception du programme opératoire tient compte au maximum de cette particularité et priorise ainsi la mise en veille des modules dont l'activité ne lui est pas nécessaire. Par exemple, le programme opératoire des badges auxquels on a imposé une périodicité très longue entre deux calculs de localisation (toutes les heures ou une fois par jour, par mois voire par année), mettra en veille presque la totalité de l'électronique du badge pendant les moments où il n'est pas actif, réduisant ainsi sa consommation en énergie au strict minimum (quelques microampères). L'invention prévoit diverses méthodes d'un réveil non programmé du badge dont celle de l'équiper d'un accéléromètre dont la sensibilité est réglable. Si l'accélération appliquée au badge dépasse un seuil réglé, l'accéléromètre va réveiller le programme opératoire du badge qui va ainsi analyser la raison du réveil et agir en fonction des instructions y prévues dans cette circonstance.

L'installation selon l'invention trouve des applications dans un nombre varié de domaines, de cas et de lieux tels, par exemple, les bureaux, les halls de fabrication, les centrales nucléaires ou autres entreprises à risque, les hôpitaux, les bâtiments, structures ou organisations qui accueillent des personnes qui doivent faire l'objet d'un suivi ou d'une surveillance, les aéroports, les infrastructures touristiques, culturelles ou de formation, les banques, les centres administratifs, les infrastructures militaires, le suivi de la maintenance des équipements, les entreprises en général, les immeubles de bureaux partagés par plusieurs entreprises, la protection des personnalités, la logistique (pour le suivi des colis en général et plus particulièrement des objets ou êtres vivants dangereux, rares, précieux ou de grande valeur), les surfaces de vente (tout autant dans le domaine général de la sécurité et de la protection mais également pour des études de marketing), le domaine médical, la géomatique (elle permet à la géomatique de quitter son aspect statique pour mettre en oeuvre des application de géomatique dynamique par le suivi en temps réel des objets mais également des êtres vivants), etc. (liste exemplative et non exhaustive).

Parmi les exemples que nous ne décrirons pas en détail, citons l'aide que l'invention peut apporter aux services de secours au niveau de l'évacuation des lieux et de l'assistance et, cela, dès sa forme de réalisation la plus élémentaire. En effet, l'invention peut aisément informer les intervenants s'il reste des personnes, êtres vivants ou objets qui sont en danger dans les parties du lieu incriminé sans exiger que les porteurs passent par des contrôles d'accès spécifiques pour signaler leur sortie du lieu lors de l'évacuation. Elle leur permet ainsi d'intervenir plus efficacement pour sauver les porteurs en péril, notamment, en pouvant indiquer leur présence mais également et surtout leur localisation. De plus, elle pourra assister encore les sauveteurs en les guidant dans les lieux de manière sécurisée et par le plus court chemin (sans danger) pour les atteindre. Comme décrit auparavant dans le texte, ce guidage pourra être fait au moyen de messages audio ou par la visualisation sur un écran portatif du plan des lieux où sont indiqués les endroits dangereux ainsi que la position de l'intervenant et celle du porteur à secourir. Pour des raisons de facilité pour l'intervenant, l'invention permet également que le guidage de ce dernier soit réalisé à distance par une personne qui se situe à l'extérieur des lieux (une centre de crise local, par exemple) et qui, dispose d'un écran de visualisation comme décrit ci-dessus tout en ayant, de par son emplacement, une connaissance de données plus globales relatives, entre autres, à l'organisation de l'ensemble de l'assistance et au développement du sinistre.

Dans un tout autre aspect de la vie pratique, l'invention peut encore être utilisée pour qualifier son porteur, par exemple, au moyen d'un signal lumineux. Par exemple, en faisant émettre au badge (ou un périphérique que ce dernier contrôle) une couleur spécifique pour distinguer les personnes faisant partie du personnel de l'occupant des lieux, des personnes externes chargées d'effectuer un travail précis en sous-traitance et des visiteurs.

### Brève description des figures

Des particularités et détails de l'invention vont apparaître au cours de la description suivante des figures annexées qui représentent quelques formes particulières de réalisation de l'invention.
La figure 1 représente schématiquement une installation de faible taille ;
La figure 2 représente schématiquement un lieu de stockage couvert par un autre type d'installation de l'invention ;
La figure 3 reprend l'esquisse d'une grande surface et un autre exemple de réalisation de l'invention ;
La figure 4 présente un exemple d'installation dans un bâtiment soumis à une haute surveillance ;
La figure 5 représente un schéma en blocs d'une installation destinée à fournir des services pour améliorer et sécuriser les visites de sites ;
La figure 6 présente un schéma en blocs d'une installation dans le domaine de la maintenance.

### Description détaillée de modes de réalisation particuliers

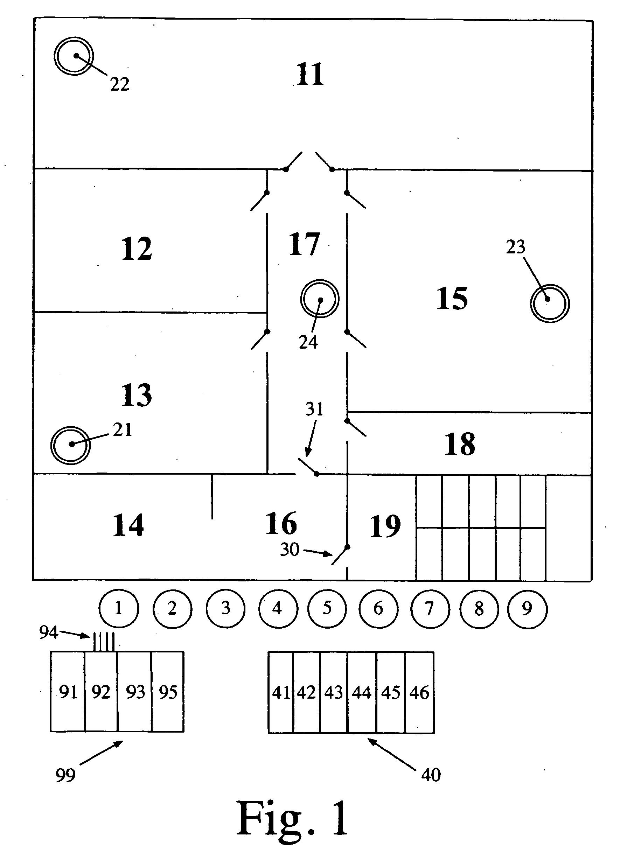

La figure 1 représente l'étage d'un bâtiment couvert par une installation de faible taille. Elle est destinée à expliquer en détail l'initialisation d'un élément dans un système ainsi que quelques comportements du programme opératoire des badges dont celui de déclenchement d'une alerte.

L'installation représentée comprend :
- une unité de traitement 99 comprenant un programmateur 91, une interface 92 pourvue d'un récepteur 93 d'ondes hertziennes dans la bande ISM (Industrie, Science et Médical, les bandes de fréquences qui peuvent être utilisées librement, pour des applications industrielles, scientifiques et médicales) de 2.4 GHz ainsi que de quatre liaisons physiques 94 avec les quatre balises et une sirène 95. Dans le présent exemple, les fonctions de l'interface sont donc partiellement regroupées avec celles des balises ;
- quatre balises numérotées de 21 à 24 équipées chacune d'un émetteur d'ondes hertziennes dans la bande ISM de 2.4 GHz. Elles sont chacune connectées à l'interface 92 de l'unité de traitement 99 par une liaison physique 94 qui assure la transmission des données mais également l'alimentation en énergie des balises (topologie de connexion des balises en étoile). Dans le cas présent, les balises ne sont pas et ne peuvent pas être autonomes puisqu'elles ne contiennent pas d'alimentation autonome en énergie ni une mémoire. En détail, une balise se résume ici à un émetteur d'ondes hertziennes piloté par l'unité de traitement et relié à cette dernière par un câble 94 qui alimente également l'émetteur en énergie.
- neuf badges déplaçables numérotés de 1 à 9 équipés chacun d'une source lumineuse, d'un émetteur de sons à membrane et d'un émetteur-récepteur d'ondes hertziennes dans la bande ISM de 2.4 GHz. Le détail des badges 1 à 9 de l'installation ici décrite est repris dans un badge 40 qui comprend une source d'énergie 41, une LED monochrome 42, un émetteur sonique à membrane 43, d'un organe d'actionnement 44 de la LED 42 et de l'émetteur sonique à membrane 43, d'une mémoire 45 et d'un émetteur-récepteur d'ondes hertziennes 46.

L'étage comporte 4 bureaux numérotés de 11 à 14, une salle de réunion 15, un hall d'accueil 16, un couloir 17, des commodités 18 et l'accès par une cage d'escalier 19. La porte d'entrée de l'étage 30 ainsi que la porte 31 qui donne accès aux bureaux depuis le hall d'accueil sont équipées d'une serrure à gâche électrique qui empêchent les personnes de pénétrer dans les bureaux sans autorisation.

Les autorisations d'accès aux locaux sont réglées comme suit :
- Excepté pour les badges 5 à 9 réservés à d'éventuels visiteurs, chaque porteur de badge dispose d'un bureau qui lui est propre et dans lequel il peut évidemment être présent sans limitation (pour ne pas compliquer l'exemple). Ainsi les bureaux personnels des porteurs des badges 1, 2, 3, et 4 sont, respectivement, les bureaux 11, 12, 13 et 14 ;
- Les porteurs de tous les badges, y compris les visiteurs peuvent être présents dans la salle de réunion 16, le couloir 17 et les commodités 18 ;

- L'accès à la cage d'escalier 19 est interdit à tous les badges, ce qui empêche leurs porteurs de quitter l'étage avec leur badge ;
- Le porteur d'un badge quelconque (y compris les visiteurs) peut accéder à un bureau autre que le sien pour autant que l'occupant du bureau y soit présent ;
- Le responsable de l'entreprise est porteur du badge 1. Il dispose d'une autorisation d'accès illimitée dans tous les locaux ;
- Outre son bureau personnel 12, le responsable adjoint, porteur du badge 2 dispose d'une autorisation pour les autres bureaux excepté le bureau 11 ;
- Le porteur du badge 3 ne dispose pas d'autorisations spécifiques ;
- La secrétaire qui porte le badge 14 dispose d'une autorisation d'entrer dans tous les bureaux mais limitée à une minute si son occupant est absent ;

On part du fait que, lors de la mise en place, la phase d'initialisation et de test de l'installation, l'installateur a préenregistré dans le programmateur les données issues d'opérations techniques, notamment celles relatives à l'agencement des locaux. Il aura de même paramétré les balises car cette tâche implique également des opérations techniques.

### Initialisation par l'installateur

Avant l'intervention de l'utilisateur, les paramètres principaux sont réglés comme suit :
- Le programmateur de l'unité de traitement connait les données suivantes : Son numéro de série (de fabrication) est S0, le système auquel il appartient porte le numéro 111, les clés de cryptage du système sont les clés X et Y et la méthode de cryptage utilisée est la méthode Z, la périodicité de balayage est de 5 secondes, la puissance d'émission des badges est fixée à P0. L'invention prévoit que le numéro de système soit unique. Il sera attribué par un algorithme qui utilisera certaines données fournies par l'opérateur qui initialise le système (et donc connues de lui seul) ainsi que le numéro de série unique du programmateur. Le numéro 111 est donc uniquement donné à titre d'exemple ;
- La balise 21 porte le numéro de série S1, appartient au système 111, elle porte le numéro 1 dans le système et émet à la puissance P1, les clés et la méthode de cryptage sont identiques à celles du système ;
- La balise 22 porte le numéro de série S2, appartient au système 111, elle porte le numéro 2 dans le système et émet à la puissance P2, les clés et la méthode de cryptage sont identiques à celles du système ;
- La balise 23 porte le numéro de série S3, appartient au système 111, elle porte le numéro 3 dans le système et émet à la puissance P3, les clés et la méthode de cryptage sont identiques à celles du système ;
- La balise 24 porte le numéro de série S4, appartient au système 111, elle porte le numéro 4 dans le système et émet à la puissance P4, les clés et la méthode de cryptage sont identiques à celles du système ;

Avant d'utiliser l'installation, l'utilisateur doit régler les fonctions et autorisations des badges. Il va exécuter cette opération à l'aide du programmateur et de l'interface.

Comme cela est déjà mentionné ci-avant, chaque élément porte, dès sa fabrication ou sa mise à disposition sur le marché, un numéro de série unique. C'est ce numéro unique qui va servir à initialiser les éléments pour la première fois.

Initialisation des badges par l'utilisateur

L'utilisateur va donc régler le badge 1 comme suit :
a) Il va donner au programmateur ou obtenir de ce dernier certains paramètres tels :
   - Saisie du numéro de série de fabrication S1 du badge 1. Ce numéro est essentiel car le badge n'est pas encore connu du système et son numéro de série de fabrication est le seul moyen d'identification possible et univoque. En fournissant cette donnée on avertit également le programmateur qu'il s'agit d'un nouvel élément du système qu'il coordonne.
   - Numéro du système : donné par le programmateur (c'est le 111)
   - Numéro du badge dans le système : donné automatiquement par le programmateur (ce sera le 1)
   - Mode de calcul de la localisation : donné par le programmateur - initialisé par l'installateur. Dans le cas présent, le mode de calcul sera autonome.
   - Autorisations limitées : aucune
   - Interdictions : local 19 - 10. Le 10 représente la gravité de l'alerte. Il indique au programme opératoire les actions qu'il doit mener si le badge se trouve dans cette situation. Dans l'exemple donné ici, le comportement du badge suivant les niveaux d'alerte est un programme préenregistré dans le programmateur puisqu'il est commun à tous les badges.
   - Option balise : Oui. Par ce fait, le programmateur va attribue un numéro de balise au badge (ce sera le 5). En effet, ce dernier doit assurer cette fonction pour que les autres badges, quand ils sont dans le bureau du Directeur, puissent déterminer si celui est présent ou pas.

   Une fois ces données fixées, le programmateur va entrer en contact avec le badge pour l'initialiser. Cet échange de messages va se faire via les émetteurs des balises 21 à 24 et la partie réceptrice de l'émetteur-récepteur du badge pour les messages envoyés par le programmateur 91 et via la partie émetteur de l'émetteur-récepteur du badge et le récepteur 93 de l'interface pour les messages émis par le badge. Durant toute la procédure d'initialisation du badge, les messages échangés seront marqués spécifiquement pour les distinguer des messages destinés au fonctionnement normal de l'installation et tant que le cryptage des messages n'est pas sous sa forme définitive, c'est le numéro de série de fabrication du badge qui sert d'identifiant aux messages.
b) La première étape de ce premier contact va consister à échanger les données nécessaires pour crypter les messages échangés. Cette étape ne va pas être expliquée ici car elle se base sur des procédures de cryptage classiques et connues. Cependant il convient d'ajouter que cette étape ne sera pas menée jusqu'au bout si le badge est déjà affecté à un système. Dans ce cas, le badge signalera très rapidement ce fait au programmateur et la procédure d'initialisation du badge concerné s'arrêtera. Le programmateur signalera à l'utilisateur la raison de l'arrêt de la procédure par un message ad hoc. Il convient de préciser que, si cela se passe, le numéro d'identification du système auquel appartient le badge ne sera pas communiqué par le badge au programmateur et encore moins à l'utilisateur. Il s'agit d'une procédure qui empêche à un utilisateur de s'approprier un badge qui ne lui appartient pas. Comme dit plus haut, une procédure peut être appliquée pour faire fonctionner plusieurs systèmes comme s'ils ne faisaient qu'un seul mais celle-ci exige de connaître certaines informations confidentielles des systèmes mis en commun.
c) Si la procédure continue, on passe à la présente étape qui a pour objectif final d'intégrer le badge au système. Le programmateur va envoyer au badge les informations nécessaires à son bon fonctionnement tels les tables de topographie et de spatialisation qui interviennent dans le calcul qu'exécute le badge pour déterminer sa position, le mode de calcul de sa position, le numéro du système auquel il appartient, son numéro de badge dans le système et, dans le cas présent, son numéro de balise dans le système ainsi que ses interdictions. Il convient de préciser que certaines de ces données se retrouvent sous la forme du programme opératoire cité plus haut que le programmateur communique au badge lors de cette phase d'initialisation.
d) Une fois que le badge aura traité et mémorisé ces données, il enverra un message au programmateur pour confirmer son adhésion au système et donc son état opérationnel. Au niveau des données qu'il a reçues du programmateur, le badge va les mémoriser dans une partie non volatile de sa mémoire, c'est-à-dire que s'il devait être privé d'énergie, ces données ne seront pas effacées de la mémoire. Ce mode de mémorisation poursuit au moins deux objectifs : le premier d'ordre pratique, est de ne pas obliger l'utilisateur à devoir réinitialiser le badge s'il venait à tomber en panne de batterie ; le second concerne la procédure de protection des badges empêchant l'initialisation d'un badge qui appartient déjà à une installation.

Cette opération terminée, l'utilisateur va procéder à l'initialisation du deuxième badge et des suivants de la même façon. Nous ne reprenons ci-après que les données spécifiques à chaque badge que ces données soient encodées par l'utilisateur dans le programmateur ou données par ce dernier :
e) Données du badge 2 :
   - Numéro de série de fabrication : S2 ;
   - Numéro du système : donné par le programmateur (c'est le 111)
   - Numéro du badge dans le système : donné automatiquement par le programmateur (ce sera le 2)
   - Autorisations limitées : local 11 + badge 1 - 5 (cela veut dire que le badge 2 n'est autorisé à être dans le local 11 que si le badge 1 y est aussi et que, dans le cas contraire, le badge entrera dans une alerte de type 5)
   - Interdictions : local 19 - 10
   - Option balise : Oui (ce sera le 6).
f) Données du badge 3 :
   - Numéro de série de fabrication : S3 ;
   - Numéro du système : donné par le programmateur (c'est le 111)
   - Numéro du badge dans le système : donné automatiquement par le programmateur (ce sera le 3)
   - Autorisations limitées : local 11 + badge 1 - 7, local 12 + badge 2 - 5, local 14 + badge 4 - 2
   - Interdictions : local 19 - 10
   - Option balise : Oui (ce sera le 7).
g) Données du badge 4 :
   - Numéro de série de fabrication : S4 ;
   - Numéro du système : donné par le programmateur (c'est le 111)
   - Numéro du badge dans le système : donné automatiquement par le programmateur (ce sera le 4)
   - Autorisations limitées : local 11 + badge 1 - 7, local 12 + badge 2 - 5, local 13 + badge 3 - 2, local 11 < 1 min - 7(cela veut dire que le badge peut entrer dans le local 11 mais ne peut rester plus d'une minute s'il est seul dans le local), local 12 < 1 min - 5, local 13 < 1 min - 5
   - Interdictions : local 19 - 10
   - Option balise : Oui (ce sera le 8).
h) Données des badges 5 à 9 (visiteurs) :
   - Numéro de série de fabrication : successivement le S5, S6, S7, S8 ou S9 ;
   - Numéro du système : donné par le programmateur (c'est le 111)
   - Numéro du badge dans le système : donné automatiquement par le programmateur (ce sera successivement le 5, 6, 7, 8, 9)
   - Autorisations limitées : local 11 + badge 1 - 10, local 12 + badge 2 - 7, local 13 + badge 3 - 7, local 14 + badge 4- 5
   - Interdictions : local 19 - 10
   - Option balise : Non : Le scénario de sécurité ne prévoit pas que les badges visiteurs entraînent une autorisation. Ils ne servent donc jamais de balises.

En comparant les consignes des autorisations limitées attribuées aux différents badges, on peut remarquer que, pour les mêmes circonstances d'une alerte, les niveaux d'alerte sont évidemment plus élevés pour les badges des invités que ceux du personnel.

Les consignes d'autorisations limitées sont citées ici à titre d'exemple. Elles peuvent comprendre de nombreux autres paramètres que ceux indiqué ici tels, par exemple un délai de grâce avant de déclencher l'alerte, un délai de répétition de l'alerte, une instruction complémentaire destinée à l'unité de traitement ou à un autre badge, etc.

Le programmateur va évidemment vérifier que les contraintes de sécurité sont cohérentes. Par exemple s'il constate que, dans une contrainte, on teste la présence du Directeur et que le badge du Directeur n'est pas activé pour assurer le rôle de balise mobile, il va le signaler à l'opérateur et, dans certains cas, proposer la rectification nécessaire pour assurer la cohérence des règles de sécurité.

Les badges étant initialisés, l'installation est entièrement opérationnelle.

### Explication du fonctionnement du système en mode normal.

Toutes les 5 secondes, le programmateur va faire émettre leur signal successivement à chacune des balises fixes et des badges 1 à 4 - dans leur fonction balise. Les balises qu'elles soient fixes ou mobiles vont émettre un message contenant au moins les données suivantes : une trame annonçant que ce message est un message de positionnement, le numéro de balise, le type de balise (fixe, mobile fiable ou mobile sans contrôle), les coordonnées de position, la puissance d'émission (liste exemplative, non exhaustive).

Au départ, l'unité de traitement va envoyer à l'émetteur de la balise 21, le message qu'elle doit émettre. Ensuite, il va faire de même avec la balise 22, puis la 23, puis la balise 24. Tout de suite après, il va envoyer via les émetteurs des balises un ordre au badge 1 qui porte le numéro de balise 5 d'émettre, à son tour un message en tant que balise. Puisqu'il s'agit du premier balayage, le badge 1 n'a pas encore pu calculer sa position et ne va donc émettre aucun message de positionnement. Il en sera dé même pour les badges 2, 3 et 4. L'unité de traitement va alors envoyer, via les émetteurs des balises fixes, un message indiquant que l'émission (le balayage) des balises est terminée et que les badges peuvent commencer à calculer leur position. Ceci termine donc le premier balayage par les balises.

Au niveau des badges, chacun a donc reçu, idéalement, le message d'au moins 3 des 4 balises (l'installateur a du vérifier ce fait), les badges n'ayant pas émis de message de positionnement. Si un badge a reçu moins de 3 messages de positionnement de balises dont 2 de balises fixes ou mobiles fiables (à titre de sécurité), il ne peut normalement pas calculer sa position mais, grâce à la table de topographie et de spatialisation et ses calculs statistiques, il peut arriver, dans certains cas, qu'il puisse quand même déterminer sa position. Si cela n'est pas le cas, il attendra le prochain balayage pour la calculer. Si après un nombre fixé de balayages, il n'a toujours pas reçu au minimum 3 signaux (dont minimum 2 de balises fixes ou mobiles fiables), il se mettra en alerte et émettra également une alerte à destination de l'unité de traitement. Ce fait ne devrait, en fait, se produire que si le badge commence à sortir de la couverture du système.

Si le badge a reçu au minimum 3 signaux de positionnement (dont 2 de balises fixes ou mobiles fiables), il va calculer sa position grâce aux données reçues. Le calcul de la position est basé sur la comparaison du résultat de plusieurs calculs dans lesquels interviennent des méthodes statistiques de traitement des données émises par les balises ainsi que des calculs de probabilités sur la position la plus probable du badge en fonction de l'historique de ses déplacements mais également de comparaison avec des histogrammes de diverses positions du lieu couvert par l'installation ainsi que des données issues des tables de spatialisation et de topographie.

Une fois qu'il a calculé sa position, son programme opératoire va suivre sa logique de décision et, le cas échéant, va agir sur l'organe d'actionnement de la LED et/ou de l'émetteur sonique à membrane et, si c'est prévu, communiquer un message ad hoc à l'unité de traitement. Quelques exemples concrets sont repris ci-après mais avant, cela, examinons la manière dont va se passer le deuxième balayage en supposant que tous les badges ont pu calculer leur position suite au premier balayage. Lors du deuxième balayage, les balises fixes 21 à 24 vont émettre leur signal de positionnement mais également les badges 1 à 4 puisque, connaissant chacun leur position, ils peuvent jouer leur rôle de balise mobile.

Grâce à ce deuxième balayage, supposé réussi, tout est en place pour décrire quelques cas concret de comportement des badges.

### Exemple de quelques comportements du programme opératoire des badges

- Le Directeur et son adjoint sont dans le bureau 11 du Directeur. Le badge 1 du Directeur a calculé qu'il est dans le bureau 11 pour lequel il n'a pas de contraintes de sécurité. Il se remet donc en attente du prochain balayage. Le badge 2 de l'adjoint a également calculé qu'il est dans le bureau 11 pour lequel il a une contrainte qui exige que le badge 1 (ou plus exactement, la balise 5) soit également dans le bureau 11. Il examine donc la position qu'il a reçue de la balise 5 (donc du badge 1) et constate qu'elle se situe dans le bureau 11. La condition étant remplie, il peut se remettre en attente du prochain balayage.
- Le secrétaire est dans le bureau 12. Son badge (le numéro 4) a calculé qu'il se situe dans le bureau 12 pour lequel il a plusieurs contraintes : la contrainte prioritaire est de rester moins d'une minute si le Directeur adjoint n'est pas dans le bureau. Le programme opératoire du badge de la secrétaire vérifie donc si le Directeur adjoint est dans le bureau en examinant la position du badge 2 (ou plus exactement, de la balise 6). Il constate que ce dernier n'est pas dans le bureau et lance donc, en arrière plan, un décomptage à partir d'une minute. Ce décomptage peut être interrompu lors d'un prochain balayage si le badge de la secrétaire calcule qu'il n'est plus dans le bureau du Directeur adjoint ou s'il constate qu'il est toujours dans le bureau du Directeur adjoint mais que ce dernier est également présent. Si le décomptage arrive à 0, le programme opératoire du badge de la secrétaire exécutera les actions prévues pour les alertes de type 5 (consigne d'autorisation limitée « local 12 < 1 min - 5 ») du badge 4 porté par la secrétaire.
- Le porteur du badge 3 est entré dans le bureau 14 de la secrétaire. Le programme opératoire constate qu'il est soumis à une autorisation limitée dans ce local (local 14 + badge 4 - 2). Il examine la position que le badge 4 (ou plus exactement la balise 8) de la secrétaire a envoyé et constate que le badge n'est pas dans le local 14. Puisque, dans les paramètres de l'autorisation limitée, il n'a pas été indiqué de délai, le programme opératoire du badge 3 exécute immédiatement les actions d'une alerte de type 2 (une alerte faible car l'objectif de cette alerte est d'avertir principalement le porteur du badge lui-même et, éventuellement, d'attirer l'attention des autres personnes des bureaux). Le programme opératoire du badge fautif déclenche une tâche d'arrière plan qui pilote la source sonique à membrane pour qu'elle émette un bref son avec une périodicité lente, puis envoie, à l'unité de traitement, un message d'alerte en précisant qu'elle ne doit faire que journaliser l'alerte et ne pas entreprendre d'autre action. L'alerte émise par le badge s'arrêtera dès que le porteur du badge 3 sortira du bureau de la secrétaire ou que cette dernière regagnera son bureau.

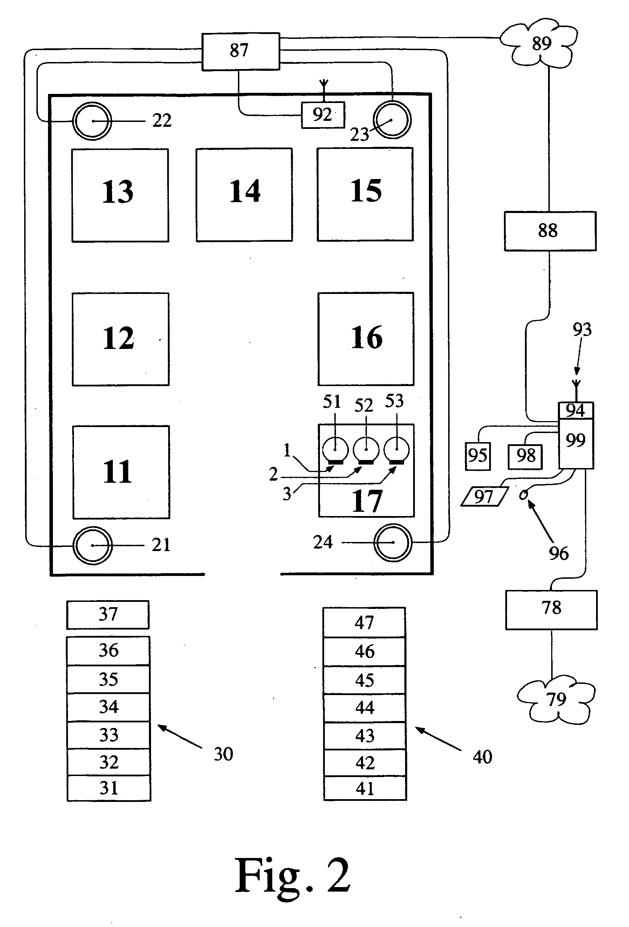

La figure 2 représente schématiquement un lieu de stockage couvert par l'invention. Elle permet d'expliquer l'aide qu'apporte l'invention au niveau de la sécurité dans les stocks et les moyens remarquables qu'elle permet de mettre en oeuvre pour corriger une faute qui pourrait être lourde de conséquence.

L'installation comprend :
- une unité de traitement 99 reliée à un écran de visualisation 98, un clavier 97 et une souris 96 ainsi qu'un interphone industriel full duplex 95 comprenant un micro et un haut-parleur. L'unité de traitement comprend un émetteur-récepteur 94 d'ondes hertziennes dans la bande ISM de 2.4 GHz qui est équipé d'une antenne externe 93. L'unité de traitement est également reliée en TCP/IP à un switch 88 qui est lui-même relié au réseau TCP/IP de sécurité 89 de l'entreprise. Elle est encore reliée par un câble à un switch 78 qui est lui-même relié au réseau informatique 79 de l'entreprise. La séparation des réseaux TCP/IP informatique et de sécurité est le résultat d'un choix stratégique de l'entreprise.
- un émetteur-récepteur d'ondes hertziennes 92 dans la bande ISM de 2.4 GHz et d'une antenne 91 relié par un câble à un switch 87 équipé de portes RJ45 à courant porteur ;
- quatre balises 21, 22, 23 et 24 équipées de portes RJ45 à courant porteur reliées chacune par câble à un switch 87 équipé de portes RJ45 à courant porteur qui est lui-même relié au réseau TCP/IP de sécurité 89 de l'entreprise. Chacune des quatre balises est équipée d'un émetteur-récepteur d'ondes hertziennes dans la bande ISM de 2.4 GHz ;
- 3 badges 1, 2 et 3 encapsulés dont, on reproduit le détail dans le badge 40. Dans l'installation ici décrite les badges 1, 2 et 3 comprennent une source d'énergie 41, une LED monochrome 42, un émetteur sonique à membrane 43, un organe d'actionnement 44 de la LED 42 et de l'émetteur sonique à membrane 43, une mémoire 45, un accéléromètre 46 et un émetteur-récepteur 47 d'ondes hertziennes dans la bande ISM de 2.4 GHz ;
- 1 badge 30 comprenant une source d'énergie, une LED polychromatique (RGB) 31, un émetteur sonique à membrane 32, un organe d'actionnement 33 de la LED 31 et de l'émetteur sonique à membrane 32, une mémoire 34, un émetteur-récepteur 35 d'ondes hertziennes dans la bande ISM de 2.4 GHz et un émetteur-récepteur 36 de faible portée pour dialoguer avec l'oreillette (écouteur + micro) 37 qui accompagne le badge.

L'émetteur-récepteur 92 a pour fonction de remplacer, le cas échéant, la liaison par fil du réseau TCP/IP de sécurité de l'entreprise qui permet aux switches 87 et 88 de correspondre. Si la liaison câblée venait à être coupée, l'émetteur-récepteur 92 dialoguerait avec l'émetteur-récepteur 94 de l'unité de traitement 99.

Le hall de stockage comprend 7 emplacements de stockage numérotés de 11 à 17. Les emplacements de stockage 12 et 15 sont libres. 3 fûts d'un produit hautement inflammable sont disposés sur l'emplacement de stockage 17. Sur chaque fût 51, 52 et 53 sont apposés respectivement les badges 1, 2 et 3.

On a demandé à un ouvrier équipé de déplacer les 3 fûts pour les stocker à l'emplacement 15. L'ouvrier est équipé du badge 30 et de l'oreillette 37 qui accompagne ledit badge.

Chacun des badges 1, 2 et 3 attachés aux fûts est en veille car son programme opératoire prévoit qu'il ne donne sa position qu'une seule fois par jour. Chacun est cependant équipé d'un accéléromètre de manière à le faire sortir de son mode veille au cas où le fût auquel il est apposé subirait un choc ou un mouvement. La sortie du mode veille fait en sorte que son programme opératoire recommence à surveiller les déplacements du fût auquel il est apposé.

L'ouvrier prend le premier fût et va le déposer sur l'emplacement 12 par erreur. Dès que le fût est déposé, le badge y apposé se met à clignoter et à émettre un bip très rapide. Le badge s'est mis en alerte et l'ouvrier ne comprend pas pourquoi. Il pourrait appeler la salle de contrôle mais c'est elle qui prend l'initiative. En effet, l'alerte est également signalée sur l'écran de l'opérateur dans la salle de contrôle. Ce dernier clique sur la ligne qui signale l'alarme et désigne son type (erreur de position de stockage) et l'écran lui fait apparaître directement le plan du hall de stockage en signalant le badge du fût incriminé sous la forme d'un spot clignotant sur l'emplacement 12. La présence de l'ouvrier est également signalée sur le plan car il était l'être humain le plus proche du badge lors de l'alerte. Il est signalé, sur le plan de l'écran, par un pictogramme représentant la silhouette d'un homme. Si c'est lui qui est signalé sur l'écran, c'est autant pour des raisons soucieuses de sa protection (il pourrait être blessé) que des raisons d'efficacité d'obtenir des informations et d'assurer un traitement rapide de l'alerte.

En cliquant sur le pictogramme, un menu contextuel se déroule dont une des options possibles est de joindre la personne vocalement car elle est équipée pour cette fonction. Par l'intermédiaire de son interphone, l'opérateur se met ainsi en contact avec l'ouvrier qui utilise l'oreillette sans fil 37 reliée à son badge 30. L'opérateur peut ainsi demander à l'ouvrier s'il n'est pas blessé, s'enquérir s'il n'y a pas d'autres blessés ou de dégâts et, comme ce n'est pas le cas, expliquer à l'ouvrier l'erreur qu'il a faite. Ensuite, en cliquant sur le spot clignotant qui représente le fût qui a déclenché l'alerte, l'opérateur peut directement visualiser la fiche signalétique du fût mais également ses contraintes de stockage, données qu'il peut obtenir grâce à la liaison entre l'unité de traitement 99 et le réseau informatique 79 de l'entreprise. De plus, puisque cette opération était programmée et pour autant que le logiciel de gestion le permette, il peut aussi constater que l'opération demandée consistait à déplacer les fûts à l'emplacement 15. L'ouvrier corrige son erreur en exécutant la manoeuvre pour le fût en alerte et, effectivement le badge arrête son alarme. L'incident peut être clôturé. Au cas où l'ouvrier qui manipulait le fût n'aurait pas disposé de moyen de communication audio et que le système n'assurerait pas le suivi en temps réel des personnes dans cette partie de l'entreprise, l'opérateur aurait pu envoyer une requête au système pour localiser la ou les personnes les plus proches de l'endroit de l'incident équipées en moyen de communication audio (propre à l'exécution de l'invention ou autre, tel un téléphone portable) afin de les contacter.

Ainsi, en mettant en oeuvre cette technologie, l'opérateur a pu avoir immédiatement un compte-rendu des éventuelles conséquences de l'alerte et mettre très rapidement en oeuvre la solution pour corriger l'erreur. La mise en application de l'invention a permis d'éviter un risque grave d'incendie ou d'explosion mais également une mauvaise manoeuvre qui aurait provoqué des perturbations dans la gestion physique du stock.

Quelques explications techniques permettront de mieux comprendre certains mécanismes :
- Dès qu'il a été réveillé, le badge du fût a pu se localiser en captant les signaux des balises 21 à 24 ;
- L'ouvrier le plus proche a pu être désigné soit parce que le système assure, dans cet endroit de l'usine, un suivi en temps réel des personnes, soit parce que le programme opératoire du badge du fût a pour instruction, dans le cas d'une telle alerte, de demander à l'unité de traitement 99 la localisation de la personne la plus proche de lui. Si l'unité de traitement 99 constate que le suivi en temps réel des personnes n'est pas actif dans cette partie de l'entreprise, elle envoie via le switch 88, le réseau de sécurité 89, le switch 87 et, enfin, les balises 21 à 24 une requête aux badges portés par des personnes pour qu'ils se localisent et/ou donnent leur localisation. En effet, même si le système n'assure pas un suivi en temps réel des personnes, le programme opératoire des badges continue de calculer la location du badge pour assurer d'autres fonctions telles les fonctions de sécurité. Les badges sont donc régulièrement à l'écoute des balises et peuvent donc recevoir des ordres spécifiques émis par l'unité de traitement.
- Le badge du fût s'est mis en alerte quand il a été déposé sur l'emplacement 12, soit parce que son programme opératoire contient dans sa mémoire une restriction d'autorisation pour cet emplacement, soit parce que le programme opératoire du badge a interrogé l'unité de traitement pour savoir si la localisation où il est déposé ne présente pas de danger et que l'unité de traitement lui a commandé de se mettre en alerte car l'emplacement 12 n'était pas autorisé.
- La localisation audio a été réalisée par une liaison entre l'oreillette 37 de l'ouvrier dont le signal a été relayé par son badge 30, signal du badge qui a été relayé par les balises 21 à 24 dont le signal a été transmis à l'interphone de l'opérateur par le truchement du switch 87, du réseau de sécurité 89, du switch 88 et enfin de l'unité de traitement 99.
- Une fois que le fût a été replacé sur l'emplacement 15, l'alerte s'est arrêtée, a été journalisée par l'unité de traitement 99 qui peut, le cas échéant, la communiquer au système informatique de gestion de l'entreprise. Le badge du fût incriminé est à nouveau entré en état de veille jusqu'à son prochain rapport de localisation planifié ou... jusqu'au prochain choc ou mouvement.

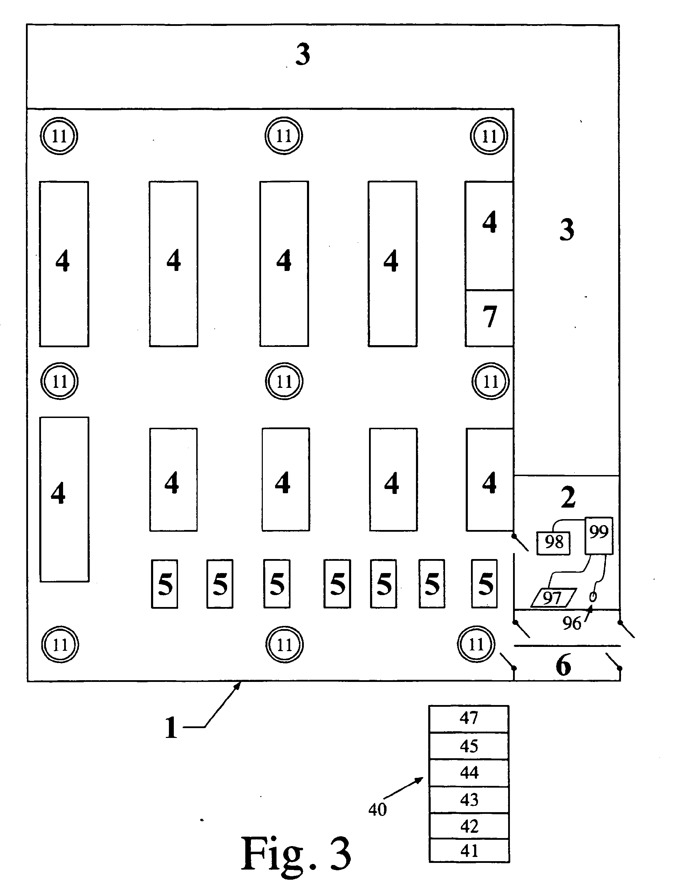

La figure 3 reprend l'esquisse d'une grande surface. Son objectif est de montrer d'autres applications remarquables de l'invention simples à mettre en oeuvre mais toujours efficaces.

L'installation comprend :
- une unité de traitement 99 reliée à un écran de visualisation 98, un clavier 97 et une souris 96. Elle est reliée à chacune des balises par un câblage spécifique (non représenté) qui permet la transmission des données mais alimentent également les balises en énergie.
- neuf balises 11 qui n'ont pas été numérotées séparément car cela n'est pas nécessaire pour les explications de l'installation. Les balises sont toutes équipées d'un émetteur-récepteur d'ondes hertziennes dans la bande ISM de 2.4 GHz. Cet émetteur-récepteur assure les fonctions de localisation. Chaque balise est reliée à l'unité de traitement par un câblage spécifique.
- des badges 40 encapsulés et attachés de manière inamovible mais visible (près de la poignée) aux chariots ou paniers utilisé par les clients pour faire leurs achats. Dans l'installation ici décrite les badges comprennent une source d'énergie 41, une ou plusieurs LED polychromatiques (RGB) 42, un émetteur sonique à membrane 43, un organe d'actionnement 44 de la ou des LED 42 et de l'émetteur sonique à membrane 43, une mémoire 45, et un émetteur-récepteur 47 d'ondes hertziennes dans la bande ISM de 2.4 GHz ;

La surface commerciale est constituée d'un bâtiment d'un seul étage 1 comprenant des rayons d'exposition de marchandises 4, un bureau de gestion 2, des réserves 3 des caisses de paiement 5, un hall d'accès 6 et un rayon (ou étalage) déterminé 7 qui va faire l'objet d'une attention particulière.

Une des premières applications que peut apporter l'invention concerne les études de marketing que les grandes surfaces effectuent fréquemment soucieuses de toute amélioration de l'agencement des rayons. L'installation proposée ici permet d'automatiser la collecte de données à ce sujet. En effet, en équipant les chariots ou paniers d'achats d'un badge, les déplacements de ces derniers vont pouvoir être suivis et enregistrés en temps réel. En se basant sur les statistiques que l'invention accumule dans son unité de traitement, on pourra établir des profils de comportement des clients.

De plus, si cela s'avère nécessaire, cette étude anonyme pourra être complétée d'interviewes de certains clients qui pourront être sélectionnés, soit par des observateurs, soit automatiquement et en temps réel par l'unité de traitement selon différents critères qui auront été établis par les personnes qui mènent l'étude. Avec cet outil, les experts pourront certainement faire des propositions intéressantes quant à l'amélioration de l'agencement des rayons.

Une autre application concerne les promotions. En effet, l'invention peut améliorer l'implication de la clientèle dans les promotions, par exemple en les attirant par des cadeaux mais en impliquant également de manière plus générale l'ensemble des clients. Prenons le cas du rayon 7 que l'on veut promouvoir. On fait connaître aux clients que ceux qui passent par ce rayon et s'y intéressent pendant 30 secondes ou plus peuvent remporter un superbe cadeau. Un tirage a lieu toutes les demi-heures. Pendant la demi-heure qui précède le tirage, l'installation va collecter les numéros des badges qui sont restés au moins 30 secondes devant le rayon. La demi-heure écoulée, l'installation fait l'inventaire des badges des gagnants potentiels et élimine ceux qui ne sont plus présents (les tombolas où personne ne gagne perdent vite toute crédibilité). Une fois cela fait, on annonce le tirage. A ce moment, les LEDS présentes sur les badges de tous les chariots ou paniers du magasin se mettent à clignoter de toutes les couleurs. Après quelques secondes, un badge est désigné par tirage au sort effectué par l'unité de traitement et annonce, à sa manière, qu'il est le gagnant en émettant divers sons et rayons lumineux ou autres artifices dont on peut équiper les badges. Le gagnant est ainsi prévenu en public et peut aller retirer son cadeau. Afin d'éviter les embouteillages au rayon promu, l'installation permet de changer le rayon de place à volonté. On peut ainsi faire en sorte que, sur une journée d'ouverture, tous les rayons aient été mis en évidence aux yeux des clients. On peut également choisir les rayons suivant les moments d'ouverture en décidant d'attirer les clients vers les rayons qui subissent des heures creuses à ces moments d'heures creuses. Cette stratégie devrait permettre de lisser la fréquentation des rayons dans le temps et donc en augmenter le potentiel de vente.

La promotion des rayons telle qu'elle est proposée ici pourrait peut être permettre aux magasins d'éviter les changements d'organisation des rayons qui sont effectués périodiquement dans le but d'obliger les gens à redécouvrir les offres du magasin et non pour améliorer l'agencement des rayons à proprement parler comme cela a été décrit dans la première application.

Avec une installation selon l'invention de suivi en temps réel telle qu'elle est proposée, le nombre de jeux ou animations que l'on peut imaginer pour promouvoir un produit, un rayon, un magasin n'a de limite que l'imagination des gens de marketing sans exiger un coût énorme puisque quasiment tout peut être géré de manière automatique par l'unité de traitement.

Au niveau technique, on peut ajouter que certaines balises actives pourraient être remplacées par des balises passives. En effet, le badge pourra de toute manière continuer à envoyer ses informations de localisation en temps réel à l'unité de traitement en utilisant les balises actives disséminées dans la surface de vente.

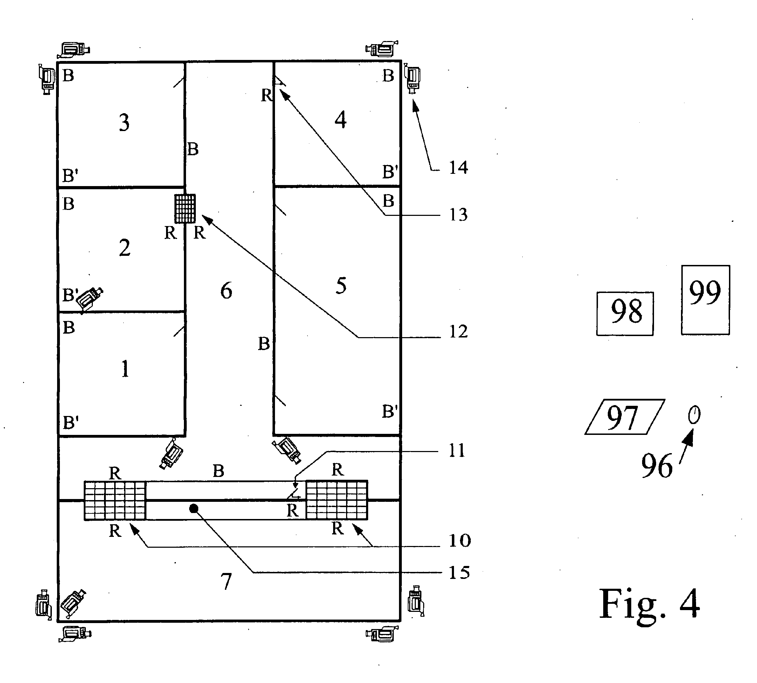

La figure 4 représente un exemple d'installation dans le rez-de-chaussée d'un bâtiment sous haute surveillance. Elle a pour objectif de décrire une nouvelle forme d'installation mais également la manière dont une installation de l'invention peut collaborer avec les systèmes de sécurité traditionnels.

L'installation comprend :
- une unité de traitement 99 reliée à un écran de visualisation 98, un clavier 97 et une souris 96. Dans ce type d'installation, on peut estimer que l'unité de traitement sera intégrée aux moyens dont dispose la salle de contrôle de sécurité, y compris la connectique autant vers les éléments faisant partie de l'installation selon l'invention (les balises, par exemple) que des autres périphériques et systèmes de sécurité utilisés dans le bâtiment (les sas d'accès, les gâches électriques, les caméra de vidéosurveillance, les lecteurs RFID, etc.) ;
- Des balises (B) équipées chacune d'un émetteur-récepteur d'ondes hertziennes dans la bande ISM de 2.4 GHz et reliées à l'unité de traitement par du câblage, le type de liaison n'a pas d'importance (TCP/IP avec ou sans courant porteur, câblage spécifique ou autre) ;
- Éventuellement des balises redondantes (B') présentes pour remplir un double objectif, à savoir, d'une part, se substituer, le cas échéant, à une balise (B) déficiente et, d'autre part, assurer une meilleure précision de la localisation.
- Des badges 30, non représentés par soucis de simplification de la figure, destinés aux employés comprenant une source d'énergie, trois LED polychromatiques (RGB) 31, 32, et 33, un émetteur sonique à membrane 34, un organe d'actionnement 35 des LEDs 31 à 33 et de l'émetteur sonique à membrane 34, une mémoire 36, un émetteur-récepteur 37 d'ondes hertziennes dans la bande ISM de 2.4 GHz, si nécessaire techniquement, un émetteur-récepteur de faible portée destiné à la lecture des RFID portés par les membres du personnel et, pour certains, une option constituée d'un émetteur-récepteur 38 de faible portée pour dialoguer avec une oreillette (écouteur + micro) 39 qui accompagnerait le badge.
- Des badges 40 destinés aux visiteurs identiques aux badges 30 si ce n'est qu'ils portent un RFID qui sert d'objet couplé au badge.
- 2 sas (10) destinés au contrôle systématique de tous les membres du personnel et ne permettant que l'accès en entrée ou en sortie d'une seule personne à la fois. Ces sas sont munis de 2 lecteurs de RFID (R) pour identifier la personne (la lecture biométrique de l'iris n'a pas été choisie dans ce cas particulier). Ils sont également équipés d'un présentoir de badges.
- 1 sas (12) destiné au contrôle personnel des personnes qui veulent entrer ou sortir du local 2. Ce sas utilise également 2 lecteurs de RFID (R) pour identifier les personnes.
- Le bâtiment, ses alentours et, exceptionnellement le local 2 sont couverts par un système de vidéosurveillance représenté par un certain nombre de caméras (14) sur la figure.
- L'accès au local 4 est défendu par une porte à gâche électrique (13) dont l'ouverture est commandée par un lecteur de RFID (R) (on aurait pu faire le choix que la porte soit ouverte par le badge).
- L'accès des visiteurs est contrôlé par une porte à gâche électrique (11) dont l'ouverture est commandée par un lecteur de RFID (R).

Le bâtiment comporte un hall d'entrée 7 libre d'accès, un local 1 libre d'accès mais où seules quelques personnes sont autorisées à entrer, un local 2 placé sous haute surveillance dont l'accès est défendu par un sas (12) équipés de lecteurs de RFID (R), un local 3 libre d'accès, un local 4 dont l'entrée est contrôlée par une porte munie d'un gâche électrique (13) commandée par un lecteur de RFID (R) et, enfin, un local 5 ainsi qu'un couloir 6 libres d'accès, tous les deux.

L'entrée d'un membre du personnel se passe comme suit : il s'identifie par la lecture d'un RFID personnel et peut ainsi pénétrer seul dans un des sas d'accès (10). Dans le sas d'accès, se trouve un présentoir dans lequel sont disposés des badges 30. Le présentoir a plusieurs fonctions : il recharge les batteries des badges, quand un badge est déposé par un membre du personnel qui sort, il rend le badge de ce dernier inutilisable en y transférant un programme opératoire qui met le badge automatiquement en état d'alerte s'il est sorti du présentoir et, enfin, pour un membre du personnel qui entre, il transfère dans la mémoire de l'un des badges du présentoir, le programme opératoire destiné à cette personne. Le choix du badge n'est pas fait au hasard : en effet, l'unité de traitement qui commande et supervise le présentoir peut établir, par les statistiques et/ou les données signalétiques de la personne, un horaire prévisionnel de la personne. L'unité de traitement va donc prendre un badge dont la batterie est suffisamment chargée pour que le badge soit opérationnel pendant au moins la durée de la présence de la personne à l'intérieur du bâtiment. Une fois le transfert du programme opératoire effectué dans le badge sélectionné, le programme opératoire du badge va faire clignoter le badge en question pour que la personne puisse le prélever du présentoir et l'accrocher de manière visible. Quelques instants après que la personne ait prélevé le badge, le système ouvre la porte du sas qui donne accès au bâtiment. Bien entendu, une procédure prévoit que si la personne laisse son badge dans le sas, ce dernier soit immédiatement bloqué et qu'une une alarme soit directement émise, le sas restant bloqué jusqu'à ce que l'équipe de sécurité ait levé l'alarme.

En ce qui concerne la sortie d'un membre du personnel, cela se passe presque exactement de la manière inverse : la personne s'identifie avec son RFID pour faire ouvrir la porte du sas qui donne sur la zone sécurisée. Quand elle est entrée (seule), la porte se referme et la personne dépose son badge dans un endroit libre du présentoir. Quand le présentoir, sous l'ordre de l'unité de traitement a transféré dans la mémoire du badge le programme opératoire qui le met immédiatement en alerte s'il est sorti du présentoir, la porte de sortie du sas s'ouvre et la personne peut sortir.

Cette procédure garantit donc que tout membre du personnel est équipé de son badge à l'intérieur du bâtiment et ne peut ressortir avec son badge. Elle rend aussi impossible qu'un membre du personnel usurpe les droits d'un autre membre du personnel (excepté si le système est trompé par le RFID mais, à ce niveau, la lecture biométrique ou l'implantation du RFID peuvent lever ce risque).

En ce qui concerne l'accueil d'un visiteur qui se présente à la réception (15), ce dernier déclare la raison de sa visite ainsi que l'identification de la personne à qui il rend visite. La personne entre ces données dans le système qui va pouvoir ainsi établir les paramètres de sécurité (et donc le programme opératoire) du badge du visiteur. Ces paramètres comprennent, entre autres, les endroits où le visiteur peut se rendre seul, les endroits où le visiteur peut se rendre avec tel ou tel accompagnateur, les endroits dangereux (qu'ils soient autorisés d'accès ou non), etc. Une fois que l'unité de traitement a transféré le programme opératoire à l'un des badges du présentoir de la réception, le badge émet un clignotement pour que la personne chargée de l'accueil puisse l'identifier et le remettre au visiteur qui doit le porter de manière visible. Une fois cela fait, la porte (11) d'accès des visiteurs est ouverte et le visiteur peut pénétrer dans le bâtiment. Un petit détail à signaler est que la LED 31 du badge d'un visiteur émettra une couleur qui permet d'identifier sa qualité de visiteur. Au besoin, si le visiteur en a fait la demande, le badge pourra guider le visiteur vers la personne qu'il visite en utilisant l'oreillette que l'accueil joindra au badge. Le prêt de cet accessoire sera acté dans le système pour qu'il soit récupéré lors de la sortie du visiteur.

La procédure qui acte la sortie d'un visiteur est similaire à celle qui acte la sortie d'un employé si ce n'est que le visiteur sort par la porte de la réception par laquelle il est entré.

Pour consolider la procédure, le hall d'entrée fait l'objet d'une surveillance attentive dont la vidéosurveillance ainsi que l'écoute permanente par les balises (B) y placées pour détecter les éventuels badges présents dans le hall d'entrée.

Bien entendu, la sécurité du bâtiment et la protection des personnes y présentes pourraient être encore renforcées en mettant en oeuvre d'autres moyens tels la reconnaissance biométrique, le port d'un sous-vêtement contenant le RFID ou une autre méthode pour améliorer le lien entre le membre du personnel et le RFID qui identifie ledit membre du personnel de manière unique.

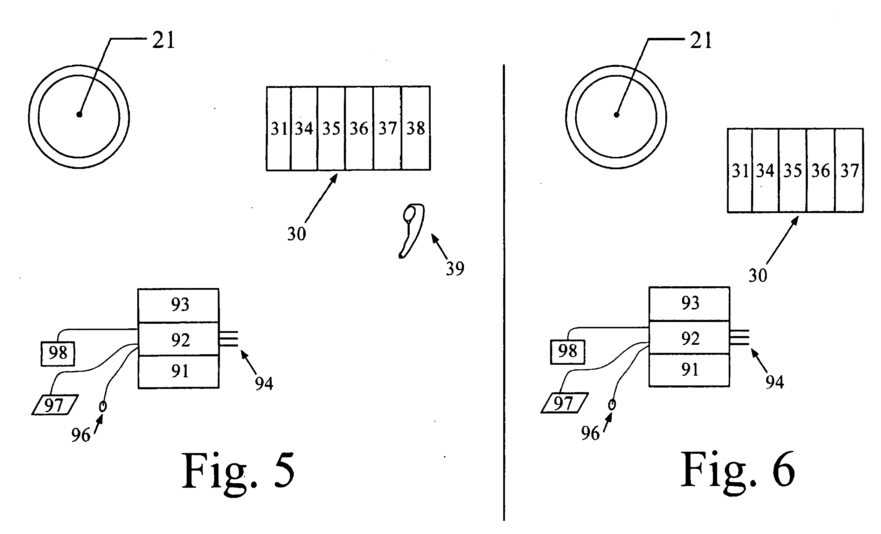

La figure 5 représente un schéma en blocs d'une installation destinée à fournir des services pour améliorer et sécuriser les visites de sites. L'explication va être limitée à une brève description de deux services que l'exemple de l'installation présentée peut apporter :
- La surveillance des groupes lors des visites menées par un guide ainsi qu'un service de traduction humaine simultanée des propos tenus par le guide ;
- Le guidage, par la parole dans les sites.

L'installation comprend :
- une unité de traitement 99 comprenant un programmateur 91, une interface 92 pourvue d'un émetteur-récepteur 93 d'ondes hertziennes dans la bande ISM (Industrie, Science et Médical, les bandes de fréquences qui peuvent être utilisées librement, pour des applications industrielles, scientifiques et médicales) de 2.4 GHz ainsi que des liaisons physiques 94 avec certaines balises. Elle est reliée à un écran de visualisation 98, un clavier 97 et une souris 96 ;
- des balises (21) équipées chacune d'un émetteur d'ondes hertziennes dans la bande ISM de 2.4 GHz. Certaines peuvent être connectées physiquement à l'interface 92 de l'unité de traitement 99 par une liaison physique 94 qui assure la transmission des données mais également l'alimentation en énergie des balises (topologie de connexion des balises en étoile). D'autres pourront réaliser la liaison avec l'unité de traitement 99 par onde hertzienne. L'alimentation des balises non liées physiquement à l'unité de traitement pourra être autonome ou réalisée par le circuit électrique de distribution du lieu qui, dans certains cas non critique, pourra être utilisé en tant que réseau porteur pour relier les balises à l'unité de traitement qui devra, dans ce cas être équipée d'un dispositif qui la connecte au réseau électrique de distribution pour l'utiliser comme réseau porteur.
- Des badges 30 comprenant une source d'énergie, une LED monochrome ou polychromatique (RGB) 31, un émetteur sonique à membrane 34, un organe d'actionnement 35 de la LED 31 et de l'émetteur sonique à membrane 34, une mémoire 36, un émetteur-récepteur 37 d'ondes hertziennes dans la bande ISM de 2.4 GHz et, pour certains, une option constituée d'un émetteur-récepteur 38 de faible portée pour dialoguer avec une oreillette (écouteur + micro) 39 qui accompagnerait le badge.

Le principe de la réalisation du service de surveillance est assez simple. Lors de leur entrée dans le lieu de visite, on attribue, aux badges des visiteurs, une balise (qui sera le badge du guide) dont ils ne peuvent s'écarter de plus d'une distance fixée. Le badge du guide, en assurant le rôle de balise mobile, permet aux badges des visiteurs de calculer leur position par rapport au guide. Si un visiteur traîne ou s'écarte du groupe, son badge se met en alerte. On peut choisir un mode plus doux de surveillance en déclenchant des alertes dont le degré de gravité augmente en fonction de l'éloignement du visiteur d'avec le guide. Par exemple, l'avertissement sonore est émis par le badge du visiteur fautif à une fréquence d'autant plus grande que ledit visiteur s'éloigne du guide. Quand le badge atteint la distance limite, il se met en alerte grave et émet le maximum d'effets lumineux et sonores. Si c'est prévu dans son programme opératoire, il peut également faire en sorte que le guide soit prévenu. Pour ce faire, il va envoyer une requête à l'unité de traitement 99 qui va envoyer au badge du guide un ordre d'émettre un effet fixé qui préviendra le guide. Le guide pourrait être également prévenu par un message audio synthétisé par l'unité de traitement et envoyé vers l'écouteur de l'oreillette du guide pour autant que le badge soit équipé de ladite oreillette. Si nécessaire, on peut envisager de demander à l'unité de traitement de conduire le guide vers le visiteur qui a déclenché l'alerte. Pour ce faire, l'unité de traitement utilisera des messages audio synthétisés ou préenregistrés. Pendant l'absence du guide, l'unité de traitement va également et automatiquement faire jouer le rôle de balise mobile que le badge du guide assurait à un badge de l'un des visiteurs du groupe. De cette façon, le groupe reste sous contrôle. Dès que l'unité de traitement aura constaté que le guide a rejoint le groupe, l'unité de traitement se servira à nouveau du badge du guide comme balise mobile. Cette substitution de balise mobile est une subtilité remarquable de l'installation. Elle est possible parce que c'est l'unité de traitement qui donne l'ordre au badge d'émettre son signal en qualité de balise.

Si on équipe le badge du guide et les badges des visiteurs d'une oreillette et, si à l'entrée, chaque visiteur déclare la langue dans laquelle il souhaiterait entendre les explications du guide, le système peut organiser une traduction simultanée des explications du guide qui se fera via les liaisons des badges avec les balises et des balises avec l'unité de traitement et de l'unité de traitement avec des cabines de traducteurs. En effet, la relation entre le badge de chaque visiteur et le badge du guide est connue, la relation entre la langue souhaitée par le visiteur et le visiteur est connue, il ne reste donc plus qu'à établir la relation entre la cabine de traduction pour la langue et le guide. Ce service n'est pas propre à l'invention mais est rendu possible de par les éléments qui constituent l'installation.

Le guidage audio automatique et interactif des visiteurs d'un site exige plus de préparation. En effet, il faudra établir la relation entre une position ou une aire sur le site et le commentaire audio à émettre. Au niveau du commentaire lui-même, il peut se réaliser d'au moins deux manières : soit le faire émettre par l'unité de traitement mais cette solution présente l'inconvénient de charger fortement les liaisons au sein de l'installation, soit d'équiper le badge d'un lecteur de musique (par exemple, un lecteur de musique liquide) qui contiendra l'ensemble des commentaires. L'avantage dont dispose l'installation par rapport à des systèmes similaires basés sur des RFID collés aux objets ou dans les lieux est qu'elle permet au badge de chaque visiteur de se localiser en tout endroit du site visité et donc d'enrichir les commentaires. Elle dispose, par contre, d'un atout majeur, car, outre cette fonction de guidage, elle peut apporter des services au niveau de la protection des visiteurs, de la sécurité des lieux et dans la prévention des accidents, par exemple, en pouvant prévenir les visiteurs des endroits dangereux ou des endroits qui ne peuvent être visités qu'avec un accompagnateur ou, encore, en signalant les visiteurs qui se trouvent dans des endroits interdits.

La figure 6 présente un schéma en blocs d'une installation dans le domaine de la maintenance. Elle présente des fonctions remarquables pour les équipements mobiles mais peut parfaitement convenir pour les équipements fixes. L'installation va pouvoir assurer les fonctions suivantes en temps réel :
- Localiser les équipements mobiles ;
- Connaître l'état des équipements mobiles ;
- Réserver des équipements mobiles ;
- Disposer de données relatives à l'usage des équipements ;
- Signaler de manière simple, à l'utilisateur, les équipements en panne ou en défaut de maintenance.

L'installation comprend les éléments suivants :
- une unité de traitement 99 comprenant un programmateur 91, une interface 92 pourvue d'un récepteur 93 d'ondes hertziennes dans la bande ISM (Industrie, Science et Médical, les bandes de fréquences qui peuvent être utilisées librement, pour des applications industrielles, scientifiques et médicales) de 2.4 GHz ainsi que des liaisons physiques 94 avec certaines balises. Elle est reliée à un écran de visualisation 98, un clavier 97 et une souris 96 et comprend également une liaison (non représentée par soucis de simplification de la figure) avec le système informatique de la structure qui utilise l'installation (hôpital, usine, etc.) ;
- des balises (21) équipées chacune d'un émetteur d'ondes hertziennes dans la bande ISM de 2.4 GHz. Certaines peuvent être connectées physiquement à l'interface 92 de l'unité de traitement 99 par une liaison physique 94 qui assure la transmission des données mais également l'alimentation en énergie des balises (topologie de connexion des balises en étoile). D'autres pourront réaliser la liaison avec l'unité de traitement 99 par onde hertzienne. L'alimentation des balises non liées physiquement à l'unité de traitement pourra être autonome ou réalisée par le circuit électrique de distribution du lieu.
- Des badges 30 comprenant une source d'énergie, une LED monochrome ou polychromatique (RGB) 31, un émetteur sonique à membrane 34, un organe d'actionnement 35 de la LED 31 et de l'émetteur sonique à membrane 34, une mémoire 36, un émetteur-récepteur 37 d'ondes hertziennes dans la bande ISM de 2.4 GHz.

On fixe sur les équipements que l'on veut suivre ou on y intègre un badge encapsulé. La localisation est basée sur le principe même de l'invention et ne doit plus être commenté. Par une requête faite à l'unité de traitement, on peut obtenir, par exemple, tous les équipements assurant telle ou telle fonction ou répondant à un code de nomenclature déterminé.

Si le badge encapsulé lié à l'équipement est muni d'un ou plusieurs capteurs qui permettent de déterminer si l'équipement est utilisé et ce qu'il fait, il sera également possible de connaître les équipements qui ne sont pas utilisés.

Au besoin, on peut activer une fonction de réservation, par exemple, en demandant au badge encapsulé d'activer une source lumineuse dont la couleur et la fréquence de clignotement correspondent à un code d'organisation disant qu'il est réservé.

Le badge encapsulé qui est muni de capteurs peut collecter les données des capteurs, les mémoriser et, également, les envoyer à l'unité de traitement 99. Il sera ainsi possible d'établir des statistiques relatives à l'usage de l'équipement. Profitant de cette caractéristique, on pourra aussi détecter, pour les équipements visés, si leur maintenance a été assurée pour autant que ce type d'opération soit géré et suivi de manière informatique. Dans le cas où l'équipement n'est pas en ordre de maintenance, on pourra demander au badge encapsulé auquel il est lié d'émettre un signal sonore et/ou lumineux qui avertira l'utilisateur qu'il ne doit plus faire usage de cet équipement. Si l'intégration du badge encapsulé à l'équipement est suffisamment poussée, il pourra même empêcher l'équipement d'être utilisé. Cette fonction est importante car elle peut éviter des accidents ou erreur graves, par exemple, pour les équipements de levage, les appareils médicaux ou de laboratoire ou, en général, tout équipement dont un dysfonctionnement met des vies en péril.

## Revendications

1. Installation de surveillance, comprenant
- des badges déplaçables (1, 2, 3, 4, 5, 6, 7, 8, 9, 40), munis chacun d'au moins une source de rayonnement énergétique (41, 42, 43) et d'un organe d'actionnement (44) de ladite source, muni d'une mémoire (45) ;
- au moins un programmateur (91) de l'organe d'actionnement ; et
- une interface (92) entre le programmateur et la mémoire de l'organe d'actionnement, pour transférer un programme opératoire dudit programmateur dans ladite mémoire de l'organe d'actionnement,
ladite interface comprenant
- au moins une balise (21, 22, 23, 24) ;
- au moins un émetteur d'ondes énergétiques sur la balise (21, 22, 23, 24) ; et
- au moins un récepteur des dites ondes énergétiques, porté par chaque badge ; et **caractérisée en ce que**:
l'organe d'actionnement précité (44) de chaque badge et sa mémoire (45) étant pilotés par
- une position spatiale dudit badge (1, 2, 3, 4, 5, 6, 7, 8, 9, 40) par rapport à la balise (21, 22, 23, 24), ladite position spatiale étant calculée à tout instant par le programme opératoire en réponse à des messages envoyés par la balise (21, 22, 23, 24),
et **en ce qu'**un au moins des badges (1, 2, 3, 4) est polyvalent, pouvant ainsi assurer le rôle de balise.

2. Installation selon la revendication 1, **caractérisée en ce qu'**au moins un des badges (1, 2, 3, 4) polyvalents assure la fonction de balise.

3. Installation selon la revendication 1 ou 2, **caractérisée en ce que** la balise (21, 22, 23, 24) et/ou la balise du badge polyvalent (1, 2, 3, 4) comprend une horloge qui est conçue pour cadencer une émission des dites ondes énergétiques par l'émetteur.

4. Installation selon l'une quelconque des revendications 1 ou 3, **caractérisée en ce que** l'organe d'actionnement (44) et la mémoire (45) sont pilotés en réponse à des consignes transmises par la balise (21, 22, 23, 24).

5. Installation selon la revendication 4, **caractérisée en ce que** les consignes comprennent des consignes qui sont relatives aux coordonnées spatiales des badges déplaçables (1, 2, 3, 4, 5, 6, 7, 8, 9, 40).

6. Installation selon la revendication 5, **caractérisée en ce que** le programmateur (91) inclut un programme contenant une table de spatialisation comprenant des paramètres en relation avec les coordonnées spatiales susdites des badges (1, 2, 3, 4, 5, 6, 7, 8, 9, 40).

7. Installation selon l'une quelconque des revendications 1 à 6, **caractérisée en ce que** l'organe d'actionnement (44) et la mémoire (45) sont pilotés en réponse à des consignes transmises par la balise (21, 22, 23, 24) et relatives à la topographie de l'environnement des badges (1, 2, 3, 4, 5, 6, 7, 8, 9, 40).

8. Installation selon la revendication 7, **caractérisée en ce que** le programmateur (91) inclut un programme contenant une table de topographie comprenant des paramètres relatifs à la topographie précitée de l'environnement des badges déplaçables (1, 2, 3, 4, 5, 6, 7, 8, 9, 40).

9. Installation selon l'une quelconque des revendications 1 à 8, **caractérisée en ce que** chaque badge déplaçable (1, 2, 3, 4, 5, 6, 7, 8, 9, 40) comprend un émetteur d'ondes énergétiques (47) et la balise (21, 22, 23, 24) comprend un récepteur des dites ondes énergétiques et **en ce que** l'organe d'actionnement (44) de chaque badge déplaçable (1, 2, 3, 4, 5, 6, 7, 8, 9, 40) est piloté par des informations transférées de l'émetteur dudit badge (1, 2, 3, 4, 5, 6, 7, 8, 9, 40) vers le récepteur de la balise (21, 22, 23, 24).

10. Installation selon l'une quelconque des revendications 1 à 9, **caractérisée en ce qu'**elle comprend en outre une unité de traitement (99) d'informations recueillies du badge et/ou de la balise.

11. Installation selon la revendication 10, **caractérisée en ce que** l'unité de traitement (99) conçue pour mémoriser des données, effectuer des opérations mathématiques et/ou de logique.

12. Installation selon la revendication 10 ou 11, **caractérisée en ce que** l'unité de traitement est conçue pour donner au badge polyvalent (1, 2, 3, 4) l'instruction d'assurer la fonction de balise.

13. Installation selon l'une quelconque des revendications 10 à 12, **caractérisée en ce qu'**elle comprend au moins une seconde balise (21, 22, 23, 24) équipée d'un émetteur et d'un récepteur des ondes énergétiques, les deux balises étant reliées en réseau.

14. Installation selon a revendication 13, **caractérisée en ce que** le réseau est du type à collisions.

15. Installation selon la revendication 13, **caractérisée en** en ce que le réseau est du type à balayage.

16. Installation selon l'une quelconque des revendications 10 à 15, **caractérisée en ce que** au moins un des badges déplaçables (1, 2, 3, 4, 5, 6, 7, 8, 9, 40) comprend une seconde mémoire qui a pour fonction de mémoriser la position spatiale dudit badge par rapport à la ou chaque balise (21, 22, 23, 24), ladite seconde mémoire étant adaptée à être lue par l'interface (92).

17. Installation selon l'une quelconque des revendications 1 à 16, **caractérisée en ce que** la ou chaque balise (21, 22, 23, 24) comprend un compteur d'impulsions, conçu pour envoyer des signaux énergétiques de l'émetteur de la balise vers le récepteur de chaque badge déplaçable (1, 2, 3, 4, 5, 6, 7, 8, 9, 40), à intervalles de temps définis.

18. Installation selon l'une quelconque des revendications 1 à 17, **caractérisée en ce** le programmateur (91) et/ou chaque balise (21, 22, 23, 24) est déplaçable.

19. Installation selon l'une quelconque des revendications 1 à 18, **caractérisée en ce que** la liaison par ondes énergétiques entre le récepteur (16) d'au moins un badge déplaçable (1, 2, 3, 4, 5, 6, 7, 8, 9, 40) et l'émetteur de la balise (21, 22, 23, 24) passe par au moins un relais équipé d'un émetteur-récepteur d'ondes énergétiques.

20. Installation selon l'une quelconque des revendications 1 à 19, **caractérisée en ce que** au moins un badge (1, 2, 3, 4, 5, 6, 7, 8, 9, 40) porte au moins un détecteur de mouvement et/ou au moins un capteur d'un paramètre physique ou chimique ou physiologique.

21. Installation selon la revendication 20, **caractérisée en ce que**, dans le cas où un badges (1, 2, 3, 4, 5, 6, 7, 8, 9, 40) comprend une seconde mémoire, celle-ci est conçue pour mémoriser la grandeur de paramètres mesurés par le détecteur, respectivement le capteur.

22. Installation selon l'une quelconque des revendications 1 à 21, **caractérisée en ce que** au moins un badge (1, 2, 3, 4, 5, 6, 7, 8, 9, 40) est couplé à un objet identifiant du porteur dudit badge.

23. Installation selon l'une quelconque des revendications 1 à 22, **caractérisée en ce qu'**elle comprend au moins un premier badge déplaçable muni d'un récepteur d'ondes énergétiques et au moins un second badge déplaçable qui est muni d'un récepteur et d'un émetteur d'ondes énergétiques et **en ce que** l'organe d'actionnement (44) du premier badge déplaçable est piloté par des informations transférées de l'émetteur du second badge vers le récepteur du premier badge.

24. Installation selon l'une quelconque des revendications 1 à 23, **caractérisée en ce que** la source de rayonnement énergétique (41, 42, 43) d'au moins un des badges déplaçables (1, 2, 3, 4, 5, 6, 7, 8, 9, 40) comprend une source de rayonnement acoustique (43) ou électromagnétique (42) et **en ce que** l'organe d'actionnement (44) est conçu en sorte d'agir sur l'activation, la fréquence et/ou l'intensité du rayonnement.

25. Installation selon la revendication 24, **caractérisée en ce que** la source de rayonnement énergétique est une source lumineuse (42).

26. Installation selon l'une quelconque des revendications 1 à 25, **caractérisée en ce que** au moins un des badges (1, 2, 3, 4, 5, 6, 7, 8, 9, 40) comprend un micro et/ou un diffuseur de son et/ou un lecteur d'images et/ou un émetteur d'images.

27. Installation selon l'une quelconque des revendications 1 à 26, **caractérisée en ce que** au moins un badge (1, 2, 3, 4, 5, 6, 7, 8, 9, 40) est solidarisé à une balise (21, 22, 23, 24).

28. Installation selon l'une quelconque des revendications 1 à 27, **caractérisée en ce que** les badges (1, 2, 3, 4, 5, 6, 7, 8, 9, 40) sont portés par des personnes et/ou des animaux et/ou des objets fixes ou déplaçables.

29. Installation selon l'une quelconque des revendications 1 à 28, **caractérisée en ce qu'**elle comprend en outre un dispositif pourvu d'une intelligence artificielle conçue pour réagir à un signal émis par la source de rayonnement énergétique des badges (1, 2, 3, 4, 5, 6, 7, 8, 9, 40).

30. Installation selon les revendications 28 ou 29, pour la surveillance de locaux d'un immeuble (11, 12, 13, 14, 15, 16, 17, 18, 19).

## Claims

1. A surveillance installation, comprising:
- badges (1, 2, 3, 4, 5, 6, 7, 8, 9, 40) capable of displacement, each provided with at least one energy radiation source (41, 42, 43) and an actuation member (44) for said source, provided with a memory (45);
- at least one actuation member programming unit (91); and
- an interface (92) between the programming unit and the actuation member memory, for transferring an operating program from said programming unit to said actuation member memory,
said interface comprising
- at least one beacon (21, 22, 23, 24);
- at least one sender of energy waves to the beacon (21, 22, 23, 24); and
- at least one receiver of said energy waves, supported by each badge; and **characterized in that** :
the abovementioned actuation member (44) of each badge and its memory (45) being driven by
- a space position of said badge (1, 2, 3, 4, 5, 6, 7, 8, 9, 40) relative to the beacon (21, 22, 23, 24), said space position being calculated at any instant by the operating program in response to messages sent by the beacon (21, 22, 23, 24),
and **in that** at least one of the badges (1, 2, 3, 4) is multipurpose and may thus handle the beacon role.

2. The installation as claimed in claim 1, **characterized in that** at least one of the multipurpose badges (1, 2, 3, 4) handles the beacon role.

3. The installation as claimed in claim 1 or 2, **characterized in that** the beacon (21, 22, 23, 24) and/or the beacon of the multipurpose badge (1, 2, 3, 4) comprises a clock which is designed to pace a transmission of said energy waves by the transmitter.

4. The installation as claimed in claim 1 or 3, **characterized in that** the actuation member (44) and the memory (45) are driven in response to instructions transmitted by the beacon (21, 22, 23, 24).

5. The installation as claimed in claim 4, **characterized in that** the instructions comprise instructions relating to the space coordinates of the badges capable of displacement (1, 2, 3, 4, 5, 6, 7, 8, 9, 40).

6. The installation as claimed in claim 5, **characterized in that** the programming unit (91) includes a program containing a spatialization table comprising parameters relating to the abovementioned space coordinates of the badges (1, 2, 3, 4, 5, 6, 7, 8, 9, 40).

7. The installation as claimed in any one of claims 1 to 6, **characterized in that** the actuation member (44) and the memory (45) are driven in response to instructions transmitted by the beacon (21, 22, 23, 24) and relating to the topography of the environment of the badges (1, 2, 3, 4, 5, 6, 7, 8, 9, 40).

8. The installation as claimed in claim 7, **characterized in that** the programming unit (91) includes a program containing a topography table comprising parameters relating to the abovementioned topography of the environment of the badges capable of displacement (1, 2, 3, 4, 5, 6, 7, 8, 9, 40).

9. The installation as claimed in any one of claims 1 to 8, **characterized in that** each badge capable of displacement (1, 2, 3, 4, 5, 6, 7, 8, 9, 40) comprises an energy wave transmitter (47) and the beacon (21, 22, 23, 24) comprises a receiver of said energy waves and **in that** the actuation member (44) for each badge capable of displacement (1, 2, 3, 4, 5, 6, 7, 8, 9, 40) is driven by information transferred from the transmitter of said badge (1, 2, 3, 4, 5, 6, 7, 8, 9, 40) to the receiver of the beacon (21, 22, 23, 24).

10. The installation as claimed in any one of claims 1 to 9, **characterized in that** it also comprises a processing unit (99) for information collected from the badge and/or from the beacon.

11. The installation as claimed in claim 10, **characterized in that** the processing unit (99) designed to memorize data, performs mathematical and/or logical operations.

12. The installation as claimed in claim 10 or 11, **characterized in that** the processing unit is designed to give the multipurpose badge (1, 2, 3, 4) the instruction to handle the beacon function.

13. The installation as claimed in any one of claims 10 to 12, **characterized in that** it comprises at least one second beacon (21, 22, 23, 24) equipped with a transmitter and a receiver of the energy waves, the two beacons being linked in a network.

14. The installation as claimed in claim 13, **characterized in that** the network is of the type with collisions.

15. The installation as claimed in claim 13, **characterized in that** the network is of the type with scanning.

16. The installation as claimed in any one of claims 10 to 15, **characterized in that** at least one of the badges capable of displacement (1, 2, 3, 4, 5, 6, 7, 8, 9, 40) comprises a second memory, the function of which is to memorize the space position of said badge relative to the or each beacon (21, 22, 23, 24), said second memory being designed to be read by the interface (92).

17. The installation as claimed in any one of claims 1 to 16, **characterized in that** the or each beacon (21, 22, 23, 24) comprises a pulse counter, designed to send energy signals from the transmitter of the beacon to the receiver of each badge capable of displacement (1, 2, 3, 4, 5, 6, 7, 8, 9, 40), at predetermined time intervals.

18. The installation as claimed in any one of claims 1 to 17, **characterized in that** the programming unit (91) and/or each beacon (21, 22, 23, 24) is/are capable of displacement.

19. The installation as claimed in any one of claims 1 to 18, **characterized in that** the link by energy waves between the receiver (16) of at least one badge capable of displacement (1, 2, 3, 4, 5, 6, 7, 8, 9, 40) and the transmitter of the beacon (21, 22, 23, 24) passes through at least one relay equipped with an energy wave transceiver.

20. The installation as claimed in any one of claims 1 to 19, **characterized in that** at least one badge (1, 2, 3, 4, 5, 6, 7, 8, 9, 40) supports at least one motion detector and/or at least one sensor of a physical or chemical or physiological parameter.

21. The installation as claimed in claim 20, **characterized in that**, in the case where a badge (1, 2, 3, 4, 5, 6, 7, 8, 9, 40) comprises a second memory, the latter is designed to memorize the quantities of parameters measured by the detector, respectively the sensor.

22. The installation as claimed in any one of claims 1 to 21, **characterized in that** at least one badge (1, 2, 3, 4, 5, 6, 7, 8, 9, 40) is coupled to an object identifying the wearer of said badge.

23. The installation as claimed in any one of claims 1 to 22, **characterized in that** it comprises at least one first badge capable of displacement provided with an energy wave receiver and at least one second badge capable of displacement that is provided with a receiver and a transmitter of energy waves and **in that** the actuation member (44) of the first badge capable of displacement is driven by information transferred from the transmitter of the second badge to the receiver of the first badge.

24. The installation as claimed in any one of claims 1 to 23, **characterized in that** the energy radiation source (41, 42, 43) for at least one of the badges capable of displacement (1, 2, 3, 4, 5, 6, 7, 8, 9, 40) comprises an acoustic (43) or electromagnetic (42) radiation source and **in that** the actuation member (44) is designed to act on the activation, the frequency and/or the intensity of the radiation.

25. The installation as claimed in claim 24, **characterized in that** the energy radiation source is a light source (42).

26. The installation as claimed in any one of claims 1 to 25, **characterized in that** at least one of the badges (1, 2, 3, 4, 5, 6, 7, 8, 9, 40) comprises a microphone and/or a sound diffuser and/or an image reader and/or an image transmitter.

27. The installation as claimed in any one of claims 1 to 26, **characterized in that** at least one badge (1, 2, 3, 4, 5, 6, 7, 8, 9, 40) is joined to a beacon (21, 22, 23, 24).

28. The installation as claimed in any one of claims 1 to 27, **characterized in that** the badges (1, 2, 3, 4, 5, 6, 7, 8, 9, 40) are worn by people and/or animals and/or objects that are fixed or capable of displacement.

29. The installation as claimed in any one of claims 1 to 28, **characterized in that** it also comprises a device provided with an artificial intelligence designed to react to a signal transmitted by the energy radiation source of the badges (1, 2, 3, 4, 5, 6, 7, 8, 9, 40).

30. The installation as claimed in claim 28 or 29, for the surveillance of rooms of a building (11, 12, 13, 14, 15, 16, 17, 18, 19).

## Patentansprüche

1. Überwachungsanlage, umfassend:
- ortsbewegliche Plaketten (1, 2, 3, 4, 5, 6, 7, 8, 9, 40), die jeweils mit mindestens einer energetischen Strahlungsquelle (41, 42, 43) und einem mit einem Speicher (45) versehenen Organ (44) zum Betätigen der Quelle versehen sind;
- mindestens ein Programmschaltwerk (91) des Betätigungsorgans; und
- eine Schnittstelle (92) zwischen dem Programmschaltwerk und dem Speicher des Betätigungsorgans, um ein Betriebsprogramm von dem Programmschaltwerk in den Speicher des Betätigungsorgans zu übertragen,
wobei die Schnittstelle folgendes umfasst:
- mindestens eine Bake (21, 22, 23, 24);
- mindestens einen energetischen Wellensender auf der Bake (21, 22, 23, 24); und
- mindestens einen Empfänger der energetischen Wellen, der von jeder Plakette getragen wird; und
**dadurch gekennzeichnet, dass**:
das zuvor genannte Betätigungsorgan (44) jeder Plakette und sein Speicher (45) angesteuert werden durch:
- eine räumliche Position der Plakette (1, 2, 3, 4, 5, 6, 7, 8, 9, 40) im Verhältnis zu der Bake (21, 22, 23, 24), wobei die räumliche Position jederzeit von dem Betriebsprogramm als Reaktion auf Nachrichten, die von der Bake (21, 22, 23, 24) gesendet werden, berechnet wird,
und mindestens eine der Plaketten (1, 2, 3, 4) vielseitig ist, so dass sie die Rolle der Bake übernehmen kann.

2. Anlage nach Anspruch 1, **dadurch gekennzeichnet, dass** mindestens eine der vielseitigen Plaketten (1, 2, 3, 4) die Funktion der Bake übernimmt.

3. Anlage nach Anspruch 1 oder 2, **dadurch gekennzeichnet, dass** die Bake (21, 22, 23, 24) und/oder die Bake der vielseitigen Plakette (1, 2, 3, 4) einen Taktgeber umfasst, der gedacht ist, um eine Sendung der energetischen Wellen durch den Sender zu takten.

4. Anlage nach einem der Ansprüche 1 oder 3, **dadurch gekennzeichnet, dass** das Betätigungsorgan (44) und der Speicher (45) als Reaktion auf Anweisungen, die von der Bake (21, 22, 23, 24) übertragen werden, angesteuert werden.

5. Anlage nach Anspruch 4, **dadurch gekennzeichnet, dass** die Anweisungen solche umfassen, die sich auf die räumlichen Koordinaten der ortsbeweglichen Plaketten (1, 2, 3, 4, 5, 6, 7, 8, 9, 40) beziehen.

6. Anlage nach Anspruch 5, **dadurch gekennzeichnet, dass** das Programmschaltwerk (91) ein Programm umfasst, das eine Verräumlichungstabelle enthält, die Parameter in Zusammenhang mit den obigen räumlichen Koordinaten der Plaketten (1, 2, 3, 4, 5, 6, 7, 8, 9, 40) umfasst.

7. Anlage nach einem der Ansprüche 1 bis 6, **dadurch gekennzeichnet, dass** das Betätigungsorgan (44) und der Speicher (45) als Reaktion auf Anweisungen, die von der Bake (21, 22, 23, 24) übertragen werden und sich auf die Topographie der Umgebung der Plaketten (1, 2, 3, 4, 5, 6, 7, 8, 9, 40) beziehen, angesteuert werden.

8. Anlage nach Anspruch 7, **dadurch gekennzeichnet, dass** das Programmschaltwerk (91) ein Programm umfasst, das eine Topographietabelle enthält, die Parameter über die obige Topographie der Umgebung der ortsbeweglichen Plaketten (1, 2, 3, 4, 5, 6, 7, 8, 9, 40) umfasst.

9. Anlage nach einem der Ansprüche 1 bis 8, **dadurch gekennzeichnet, dass** jede ortsbewegliche Plakette (1, 2, 3, 4, 5, 6, 7, 8, 9, 40) einen energetischen Wellensender (47) umfasst und die Bake (21, 22, 23, 24) einen Empfänger der energetischen Wellen umfasst, und dass das Betätigungsorgan (44) jeder ortsbeweglichen Plakette (1, 2, 3, 4, 5, 6, 7, 8, 9, 40) durch Informationen angesteuert wird, die von dem Sender der Plakette (1, 2, 3, 4, 5, 6, 7, 8, 9, 40) zum Empfänger der Bake (21, 22, 23, 24) übermittelt werden.

10. Anlage nach einem der Ansprüche 1 bis 9, **dadurch gekennzeichnet, dass** sie ferner eine Einheit (99) zum Verarbeiten von Informationen, die von der Plakette und/oder der Bake gesammelt wurden, umfasst.

11. Anlage nach Anspruch 10, **dadurch gekennzeichnet, dass** die Verarbeitungseinheit (99) dazu gedacht ist, Daten zu speichern und mathematische und/oder logische Operationen auszuführen.

12. Anlage nach Anspruch 10 oder 11, **dadurch gekennzeichnet, dass** die Verarbeitungseinheit dazu gedacht ist, um der vielseitigen Plakette (1, 2, 3, 4) den Befehl zu geben, die Funktion der Bake zu übernehmen.

13. Anlage nach einem der Ansprüche 10 bis 12, **dadurch gekennzeichnet, dass** sie mindestens eine zweite Bake (21, 22, 23, 24) umfasst, die mit einem Sender und einem Empfänger der energetischen Wellen ausgestattet ist, wobei die beiden Baken miteinander vernetzt sind.

14. Anlage nach Anspruch 13, **dadurch gekennzeichnet, dass** das Netzwerk von der Art mit Kollisionen ist.

15. Anlage nach Anspruch 13, **dadurch gekennzeichnet, dass** das Netzwerk von der Art mit Abtastung ist.

16. Anlage nach einem der Ansprüche 10 bis 15, **dadurch gekennzeichnet, dass** mindestens eine der ortsbeweglichen Plaketten (1, 2, 3, 4, 5, 6, 7, 8, 9, 40) einen zweiten Speicher umfasst, der die Funktion hat, die räumliche Position der Plakette im Verhältnis zu der oder jeder Bake (21, 22, 23, 24) zu speichern, wobei der zweite Speicher dazu geeignet ist, von der Schnittstelle (92) gelesen zu werden.

17. Anlage nach einem der Ansprüche 1 bis 16, **dadurch gekennzeichnet, dass** die oder jede Bake (21, 22, 23, 24) einen Impulszähler umfasst, der dazu gedacht ist, energetische Signale des Senders der Bake zu dem Empfänger jeder ortsbeweglichen Plakette (1, 2, 3, 4, 5, 6, 7, 8, 9, 40) in festgelegten Zeitabständen zu senden.

18. Anlage nach einem der Ansprüche 1 bis 17, **dadurch gekennzeichnet, dass** das Programmschaltwerk (91) und/oder jede Bake (21, 22, 23, 24) ortsbeweglich ist/sind.

19. Anlage nach einem der Ansprüche 1 bis 18, **dadurch gekennzeichnet, dass** die Verbindung über energetische Wellen zwischen dem Empfänger (16) mindestens einer ortsbeweglichen Plakette (1, 2, 3, 4, 5, 6, 7, 8, 9, 40) und dem Sender der Bake (21, 22, 23, 24) über mindestens ein Relais geht, das mit einem Sender-Empfänger für energetische Wellen ausgestattet ist.

20. Anlage nach einem der Ansprüche 1 bis 19, **dadurch gekennzeichnet, dass** mindestens eine Plakette (1, 2, 3, 4, 5, 6, 7, 8, 9, 40) mindestens einen Bewegungsdetektor und/oder mindestens einen Sensor für einen physikalischen oder chemischen oder physiologischen Parameter trägt.

21. Anlage nach Anspruch 20, **dadurch gekennzeichnet, dass** falls eine Plakette (1, 2, 3, 4, 5, 6, 7, 8, 9, 40) einen zweiten Speicher umfasst, dieser dazu gedacht ist, die Größe der Parameter zu speichern, die von dem Detektor bzw. dem Sensor gemessen werden.

22. Anlage nach einem der Ansprüche 1 bis 21, **dadurch gekennzeichnet, dass** mindestens eine Plakette (1, 2, 3, 4, 5, 6, 7, 8, 9, 40) mit einem Objekt gekoppelt ist, das den Träger der Plakette identifiziert.

23. Anlage nach einem der Ansprüche 1 bis 22, **dadurch gekennzeichnet, dass** sie mindestens eine erste ortsbewegliche Plakette, die mit einem energetischen Wellen-Empfänger versehen ist, und mindestens eine zweite ortsbewegliche Plakette, die mit einem Empfänger und einem energetischen Wellensender versehen ist, umfasst, und dass das Betätigungsorgan (44) der ersten ortsbeweglichen Plakette durch Informationen angesteuert wird, die von dem Sender der zweiten Plakette an den Empfänger der ersten Plakette übermittelt werden.

24. Anlage nach einem der Ansprüche 1 bis 23, **dadurch gekennzeichnet, dass** die energetischen Strahlungsquelle (41, 42, 43) mindestens einer der ortsbeweglichen Plaketten (1, 2, 3, 4, 5, 6, 7, 8, 9, 40) eine Quelle akustischer (43) oder elektromagnetischer (42) Strahlung umfasst, und dass das Betätigungsorgan (44) dazu gedacht ist, auf die Aktivierung, die Frequenz und/oder die Stärke der Strahlung einzuwirken.

25. Anlage nach Anspruch 24, **dadurch gekennzeichnet, dass** die energetische Strahlungsquelle eine Lichtquelle (42) ist.

26. Anlage nach einem der Ansprüche 1 bis 25, **dadurch gekennzeichnet, dass** mindestens eine der Plaketten (1, 2, 3, 4, 5, 6, 7, 8, 9, 40) ein Mikrofon und/oder einen Schallstrahler und/oder eine Bildlesevorrichtung und/oder einen Bildsender umfasst.

27. Anlage nach einem der Ansprüche 1 bis 26, **dadurch gekennzeichnet, dass** mindestens eine Plakette (1, 2, 3, 4, 5, 6, 7, 8, 9, 40) mit einer Bake (21, 22, 23, 24) fest verbunden ist.

28. Anlage nach einem der Ansprüche 1 bis 27, **dadurch gekennzeichnet, dass** die Plaketten (1, 2, 3, 4, 5, 6, 7, 8, 9, 40) von Menschen und/oder Tieren und/oder ortsfesten oder ortsbeweglichen Gegenständen getragen werden.

29. Anlage nach einem der Ansprüche 1 bis 28, **dadurch gekennzeichnet, dass** sie ferner eine Vorrichtung umfasst, die mit einer künstlichen Intelligenz versehen ist, die dazu gedacht ist, um auf ein Signal zu reagieren, das von der energetischen Strahlungsquelle der Plaketten (1, 2, 3, 4, 5, 6, 7, 8, 9, 40) abgegeben wird.

30. Anlage nach Anspruch 28 oder 29 zur Überwachung der Räumlichkeiten eines Gebäudes (11, 12, 13, 14, 15, 16, 17, 18, 19).
